# EUROPEAN PATENT SPECIFICATION

(11) **EP 4 095 456 B1**
(45) Date of publication and mention of the grant of the patent: **15.05.2024**
(21) Application number: 22173409.8
(22) Date of filing: 16.05.2022
(51) Int. Cl.: F24F 13/14, F24F 13/078

(54) **AIR-PROCESSING APPARATUS**
LUFTVERARBEITUNGSGERÄT
APPAREIL DE TRAITEMENT D'AIR

(30) Priority: 24.05.2021 KR 20210065989
(43) Date of publication of application: 30.11.2022
(73) Proprietor: LG Electronics Inc., SEOUL 07336 (KR)
(72) Inventor: Hyon, Chinsoo, 06772 Seoul (KR); Bae, Sehwan, 06772 Seoul (KR)
(74) Representative: Vossius & Partner Patentanwälte Rechtsanwälte mbB

(56) References cited:
- CN-U- 206 682 042
- DE-A1-102018 219 702
- KR-A- 20130 108 749
- KR-Y1- 200 380 530
- US-A1- 2010 040 457

## Description

### BACKGROUND OF THE INVENTION

### 1. Field of the invention

The present disclosure relates to an air-processing apparatus, and more particularly to an air-processing apparatus including a louver for adjusting the direction in which air is discharged through an outlet.

### 2. Description of the Related Art

An air-processing apparatus may conceptually include an air conditioner for adjusting indoor temperature and an air purifier for removing fine dust from indoor air.

In the case of an air conditioner, a standing-type indoor unit, a wall-mounted indoor unit, or a ceiling-mounted indoor unit may be mounted in an indoor space in order to adjust the temperature of the indoor space. An air purifier is generally configured to be movable, and is disposed on the floor of an indoor space in order to purify contaminated air in the indoor space.

An air-processing apparatus, which is mounted to a ceiling or an upper portion of a wall, has therein an outlet that is elongated in the leftward-rightward direction. Also, an air-processing apparatus, which is mounted to a ceiling or an upper portion of a wall, includes a louver and a louver-driving device for changing the orientation of the louver in order to adjust the direction in which air is discharged through the outlet formed in the leftward-rightward direction.

Related Art Document 1 (Korean Patent Laid-Open Publication No. 10-2018-0066546, published on June 19, 2018) discloses an air-processing apparatus capable of adjusting the direction in which air is discharged by changing the orientation of vanes. However, because a driving motor for changing the orientation of the vanes is disposed on one side of the vane in the leftward-rightward direction, an outlet is not formed in the portion at which the driving motor is disposed. This leads to a problem in that the area of the outlet is reduced.

Related Art Document 2 (Korean Patent Laid-Open Publication No. 10-2017-0080102, published on July 10, 2017) discloses a structure for solving a problem with a ceiling-mounted air conditioner in which a motor is mounted only at one end of vanes and thus the vanes are not capable of uniformly closing an air outlet from the end thereof at which the motor is disposed to the opposite end thereof, at which the motor is not disposed. DE 10 2018 219702 discloses an air processing apparatus upon which the preamble of appending claim 1 is based.

Meanwhile, a ceiling-mounted air-processing apparatus includes a lamp, which is disposed at a fixed portion of a main body in order to indicate the operational state thereof. For example, in the ceiling-mounted air conditioner disclosed in Related Art Document 2, a lamp is disposed on the upper surface of the fourth edge portion of the base panel. In some cases, however, illumination of the lamp is not visible depending on the positions of the lamp and a user. Further, there is a limitation on the type of information that can be provided merely by changing the lamp between an on state and an off state or operating the lamp in a flashing or constant manner.

### SUMMARY OF THE INVENTION

It is an object of the present invention to provide an air-processing apparatus having an optical output structure capable of improving visibility of a lamp for indicating the operational state thereof.

It is another object of the present invention to provide an air-processing apparatus having a structure in which an optical output device capable of providing various pieces of information through a lamp is provided.

It is still another object of the present invention to provide an air-processing apparatus having a structure in which a louver capable of maximizing a discharge area of an outlet, which is formed therein in the leftward-rightward direction, is provided.

In order to accomplish the above and other objects, an air-processing apparatus according to the present invention outputs light through a louver, which is formed so as to change in orientation, thereby effectively providing more information.

The invention is defined in the independent claim. Dependent claims describe preferred embodiments.

In order to accomplish the above and other objects, an air-processing apparatus according to the invention comprises: a case having an outlet formed therein; a louver rotatably disposed in the case and configured to adjust a direction of air flowing through the outlet and an output device comprising a lamp, a printed circuit board on which the lamp is mounted, and a transparent panel configured to allow light emitted from the lamp to pass therethrough, wherein the louver comprises a plurality of vanes spaced apart from each other in a radial direction about a louver rotation shaft, and wherein the transparent panel is disposed in at least one of the plurality of vanes.

The louver may have a cable hole formed at a position above the printed circuit board in order to allow a cable connected to the printed circuit board to pass therethrough.

The lamp and the printed circuit board may be accommodated in the louver.

The air-processing apparatus may further include a louver-driving device disposed so as to be in contact with a vane located at the outermost position, among the plurality of vanes, in order to change the orientation of the louver.

The louver may include an outer vane, spaced apart from the louver rotation shaft in the radially outward direction, and a plurality of inner vanes, disposed so as to be spaced apart from each other in the radial direction between the louver rotation shaft and the outer vane. The transparent panel may be disposed in one of the plurality of inner vanes.

A vane gear may be formed on the outer circumferential surface of the outer vane in the circumferential direction, and the louver-driving device may be engaged with the vane gear to rotate the louver.

The outer vane may be formed in the shape of an arc extending in the circumferential direction based on the louver rotation shaft.

The plurality of inner vanes may be formed to be shorter than the outer vane.

The lengths of the plurality of inner vanes may be different from each other.

The lengths of the plurality of inner vanes may gradually increase in a direction approaching the louver rotation shaft.

The spacing distance between the outer vane and each of the plurality of inner vanes may gradually increase from above to below.

Each of the plurality of inner vanes may include a lower inner vane portion, inclined so as to be gradually closer to the louver rotation shaft in the downward direction, and an upper inner vane portion, bent and extending upwards from the upper end of the lower inner vane portion.

The louver may further include an axial vane extending from the louver rotation shaft in a direction parallel to the lower inner vane portion.

The output device may further include a reflector disposed on the outer surface of the transparent panel.

The lamp may be a light-emitting diode (LED).

The output device may include a light-emitting diode (LED) array including a plurality of light-emitting diodes disposed in a line, and the transparent panel may extend in the longitudinal direction in which the louver rotation shaft is formed.

The case may have an inlet formed therein so as to be open in a direction perpendicular to the downward direction in which the outlet is open. The case may include an upper cover, a lower cover disposed so as to be spaced downwards apart from the upper cover, a rear cover having therein the inlet, a front cover disposed so as to be spaced forwards apart from the rear cover, and a bottom cover disposed below the lower cover so as to be movable in the forward-rearward direction. The louver may be rotatably disposed at the lower end of the front cover.

The air-processing apparatus according to the embodiment of the present disclosure may further include a heat exchanger configured to induce the air introduced into the inlet to exchange heat with refrigerant, or a filter device configured to remove foreign substances from the air introduced into the inlet.

The air-processing apparatus according to an embodiment of the present disclosure may further include a heat exchanger configured to induce the air introduced into the inlet to exchange heat with refrigerant.

The air-processing apparatus according to an embodiment of the present disclosure may further include a filter device configured to remove foreign substances from the air introduced into the inlet.

The details of other aspects will be included in the detailed description and the drawings below.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a perspective view showing the state in which a first air-processing apparatus, a second air-processing apparatus, and a filter cleaner according to an embodiment of the present disclosure are disposed in an indoor space;
FIG. 2 is a side view for explaining a filter cleaner disposed behind a first air-processing apparatus or a second air-processing apparatus according to an embodiment of the present disclosure;
FIG. 3 is a perspective view for explaining a guide rail disposed behind a first air-processing apparatus and a second air-processing apparatus according to an embodiment of the present disclosure;

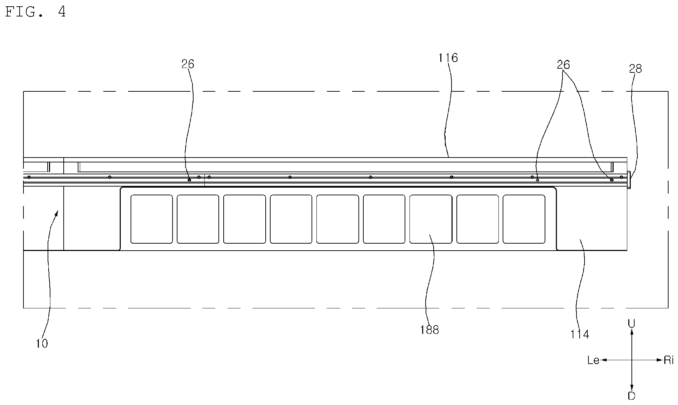

FIG. 4 is a rear view of FIG. 3;
FIG. 5 is a perspective view of a first air-processing apparatus according to an embodiment of the present disclosure;
FIG. 6 is an exploded perspective view of FIG. 5;
FIG. 7 is a bottom view of FIG. 5;
FIG. 8 is a rear view of FIG. 5;
FIG. 9 is a cross-sectional view taken along line X1-X1' in FIG. 7;
FIG. 10 is a cross-sectional view taken along line X2-X2' in FIG. 7;
FIG. 11 is a cross-sectional view taken along line X3-X3' in FIG. 7;
FIG. 12 is a perspective view showing the coupled state of a front cover and a louver according to an embodiment of the present disclosure;
FIG. 13 is a rear view of FIG. 12;
FIG. 14A is a cross-sectional view taken along line Y1-Y1' in FIG. 13;
FIG. 14B is a cross-sectional view taken along line Y2-Y2' in FIG. 13;
FIG. 15 is a perspective view of a louver according to an embodiment of the present disclosure;
FIG. 16 is a rear view of FIG. 15;
FIG. 17 is a cross-sectional view taken along line Y3-Y3' in FIG. 16;
FIG. 18A is a cross-sectional view for explaining the orientation of a first louver in a first mode;
FIG. 18B is a cross-sectional view for explaining the orientation of the first louver in a second mode;
FIG. 18C is a cross-sectional view for explaining the orientation of the first louver in a third mode;
FIG. 19 is a perspective view of a second air-processing apparatus according to an embodiment of the present disclosure;
FIG. 20 is an exploded perspective view of FIG. 19;
FIG. 21 is a bottom view of FIG. 19;
FIG. 22 is a cross-sectional view taken along line Z1-Z1' in FIG. 21;
FIG. 23 is an enlarged view of portion A in FIG. 22;
FIG. 24 is a cross-sectional view taken along line Z2-Z2' in FIG. 21;
FIG. 25A is a perspective view of an inner cover according to an embodiment of the present disclosure;
FIG. 25B is a perspective view of the inner cover when viewed from a direction different from that of FIG. 25A;
FIG. 26A is a perspective view of a second upper housing according to an embodiment of the present disclosure;
FIG. 26B is a side view of FIG. 26A;
FIG. 27 is a perspective view of a second lower housing according to an embodiment of the present disclosure;
FIG. 28 is an exploded perspective view of a filter-mounting part and a filter device according to an embodiment of the present disclosure;
FIG. 29 is a bottom perspective view of a filter-mounting part according to an embodiment of the present disclosure;
FIG. 30 is an exploded perspective view of a filter device according to an embodiment of the present disclosure;
FIG. 31 is a cross-sectional view taken along line Z3-Z3' in FIG. 21;
FIG. 32 is a cross-sectional view taken along line Z4-Z4' in FIG. 21;
FIG. 33A is a perspective view for explaining the arrangement of the second bottom cover, the filter-mounting part, and the filter device in the state in which the second bottom cover is located at a rear position;
FIG. 33B is a cross-sectional view of FIG. 33A;
FIG. 34A is a perspective view for explaining the arrangement of the second bottom cover, the filter-mounting part, and the filter device in the state in which the second bottom cover is located at a front position;
FIG. 34B is a cross-sectional view of FIG. 34A;
FIG. 35A is a perspective view for explaining the arrangement of the second bottom cover, the filter-mounting part, and the filter device in the state in which the second bottom cover is located at a front position and the filter-mounting part is moved downwards;
FIG. 35B is a cross-sectional view of FIG. 35A;
FIG. 35C is a cross-sectional view of FIG. 35A when viewed from a direction different from that of FIG. 35A;
FIG. 36 is an enlarged view of FIG. 11 for explaining an optical output structure of the first air-processing apparatus;
FIG. 37 is a perspective view of FIG. 36;
FIG. 38 is a cross-sectional view for explaining the orientation of the first louver in the second mode;
FIG. 39 is a cross-sectional view for explaining the orientation of the first louver in the third mode;
FIGS. 40 and 41 are side views for explaining arrangement of a lamp and a printed circuit board;
FIGS. 42 to 44 are views for explaining various examples of arrangement of the lamp; and
FIG. 45 is a view for explaining an optical output structure of the second air-processing apparatus.

### DETAILED DESCRIPTION OF THE PREFERRED EMBODIMENTS

Advantages and features of the present disclosure and methods for achieving them will be made clear from embodiments described below in detail with reference to the accompanying drawings. The present disclosure may, however, be embodied in many different forms, and should not be construed as being limited to the embodiments set forth herein. Rather, these embodiments are provided so that this disclosure will be thorough and complete, and will fully convey the scope of the invention to those skilled in the art. The present disclosure is defined only by the scope of the claims. Throughout the specification, the same reference numerals represent the same components.

The terms "U", "D", "Le", "Ri", "F", and "R" shown in figures indicate an upward direction, a downward direction, a leftward direction, a rightward direction, a forward direction, and a rearward direction, respectively. The aforementioned directions are used only for convenience of description, and are not intended to limit the scope of the invention.

Thus, the aforementioned directions may be set differently according to some reference.

Hereinafter, an air-conditioning system according to an embodiment of the present disclosure will be described with reference to the accompanying drawings.

An air-conditioning system of the present disclosure includes a first air-processing apparatus 100, which adjusts the temperature of air through heat exchange between the air and a refrigerant, and a second air-processing apparatus 200, which is disposed on one side of the first air-processing apparatus in order to remove foreign substances from the air. The air-conditioning system of the present disclosure includes a plurality of air-processing apparatuses 100a, 100b, and 200. The air-conditioning system of the present disclosure includes one or two or more first air-processing apparatuses 100a and 100b and one or two or more second air-processing apparatuses 200.

The air-conditioning system of the present disclosure may include a filter cleaner 300, which moves along the surface in which inlets 102a and 202a of the plurality of air-processing apparatuses 100a, 100b, and 200 are formed in order to clean pre-filters 188 and 288 disposed in the inlets 102a and 202a.

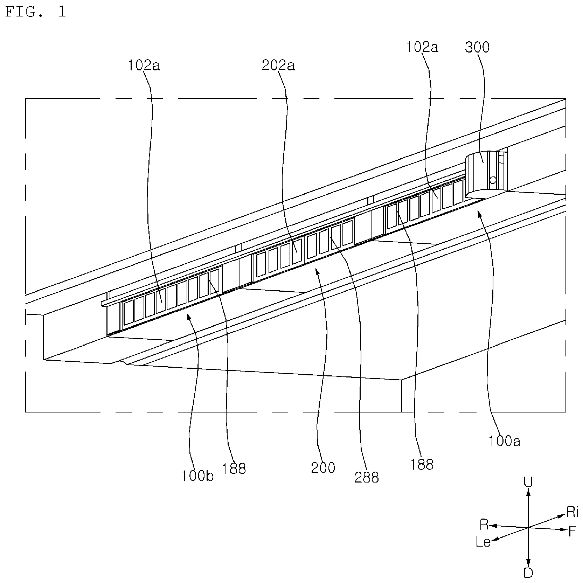

Referring to FIG. 1, the air-conditioning system of the present disclosure includes one second air-processing apparatus 200 and two first air-processing apparatuses 100 disposed on both sides of the second air-processing apparatus 200. However, this is merely illustrative, and the numbers and arrangement of first and second air-processing apparatuses 100 and 200 may be set differently.

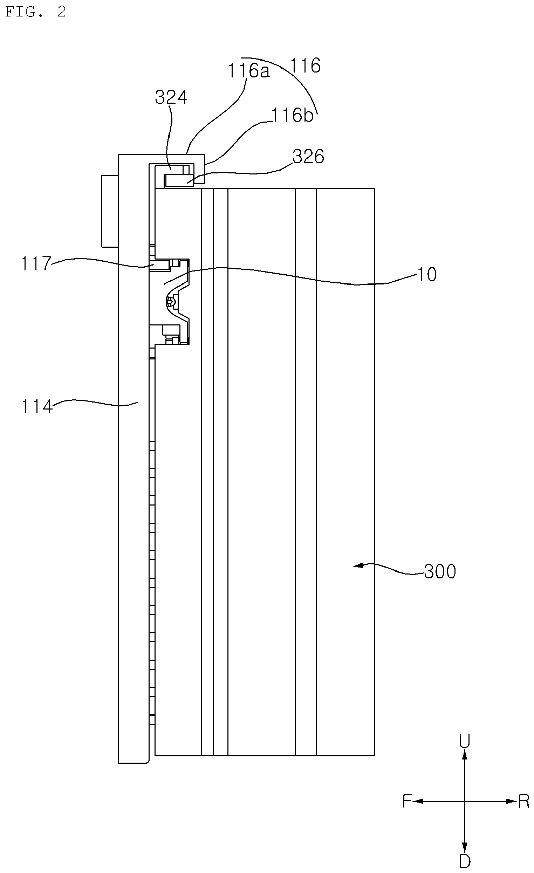

Referring to FIG. 2, the air-conditioning system includes a guide rail 10, which is disposed at the rear sides of the first air-processing apparatuses 100 and the second air-processing apparatus 200 in order to guide movement of the filter cleaner 300.

Support rails 116 and 244 for supporting the movement of the filter cleaner 300 may be disposed at the upper ends of the rear surfaces of the first air-processing apparatuses 100 and the second air-processing apparatus 200.

The support rails may include first support rails 116 disposed at the first air-processing apparatuses 100 and a second support rail 244 disposed at the second air-processing apparatus 200.

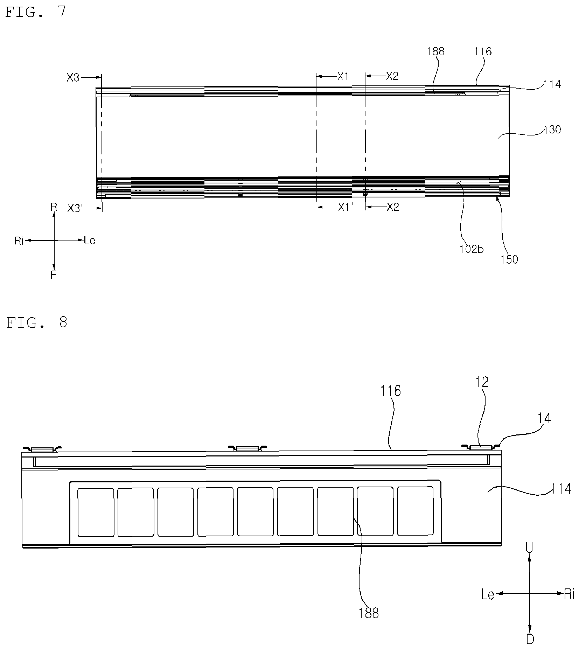

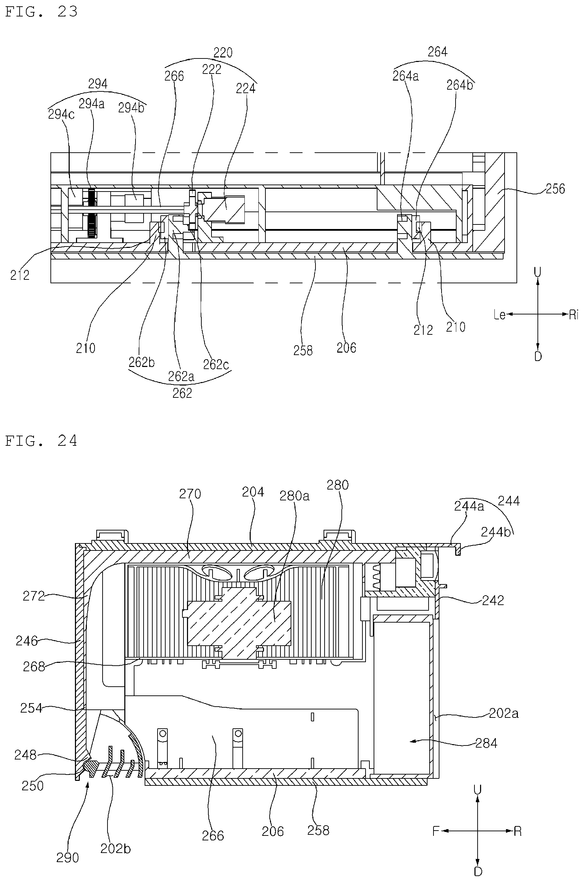

The first support rails 116 may be formed integrally with first rear covers 114 (refer to FIG. 8) of the first air-processing apparatuses 100, which will be described later. The second support rail 244 may be formed integrally with a second rear cover 242 (refer to FIG. 23) of the second air-processing apparatus 200, which will be described later.

The guide rail 10 is disposed on the rear sides of the first rear covers 114 and the second rear cover 242. The guide rail 10 is disposed above the first inlets 102a and the second inlet 202a. The guide rail 10 has a structure that extends in the leftward-rightward direction on the rear sides of the first rear covers 114 and the second rear cover 242. The guide rail 10 may be fixedly disposed below first rail-fixing protrusions 117 of the first rear covers 114 and a second rail-fixing protrusion 245 of the second rear cover 242.

The guide rail 10 includes a gear rail 20, which has threads to be engaged with a moving gear (not shown) of the filter cleaner 300, and a roller rail 22, which is in contact with a guide roller (not shown) of the filter cleaner 300.

The roller rail 22 is disposed behind the gear rail 20. The roller rail 22 is disposed at each of the upper side and the lower side of the guide rail 10. The gear rail 20 is disposed in front of the roller rail 22. The gear rail 20 is formed on the lower surface of the guide rail 10. The gear rail 20 may have the shape of a rack gear.

When viewed from the rear, the guide rail 10 may have a structure in which the gear rail 20 is shielded by the roller rail 22.

A rail groove 24 is formed in the rear surface of the guide rail 10. The rail groove 24 has a shape that is recessed in the forward direction and extends in the leftward-rightward direction. An object to be sensed 26 is disposed in the rail groove 24. The object to be sensed 26 may be provided in a plural number, and the plurality of objects to be sensed may be disposed so as to be spaced apart from each other in the leftward-rightward direction. A sensor (not shown) may be disposed at the filter cleaner 300, and when the sensor senses the object to be sensed 26, the position of the filter cleaner 300 may be detected.

The object to be sensed 26 may be formed in a structure corresponding to the sensor. For example, when the sensor is a switch sensor, the object to be sensed 26 may have the shape of a protrusion that protrudes rearwards. Alternatively, when the sensor is a Hall sensor, the object to be sensed 26 may be implemented as a magnet.

An end plate 28 for limiting movement of the filter cleaner 300 in one direction is disposed at the left end or the right end of the guide rail 10. The end plate 28 is disposed in a direction perpendicular to the direction in which the guide rail 10 extends. The end plate 28 protrudes rearwards from the rear cover 114.

The end plate 28 is provided with a charging terminal 30, with which a connection terminal 320 of the filter cleaner 300 is brought into contact. The charging terminal 30 protrudes from the end plate 28 in the direction in which the guide rail 10 extends. Accordingly, when the filter cleaner 300 reaches the end plate 28, the connection terminal 320 of the filter cleaner 300 may be brought into contact with and connected to the charging terminal 30.

### <First Air-Processing Apparatus>

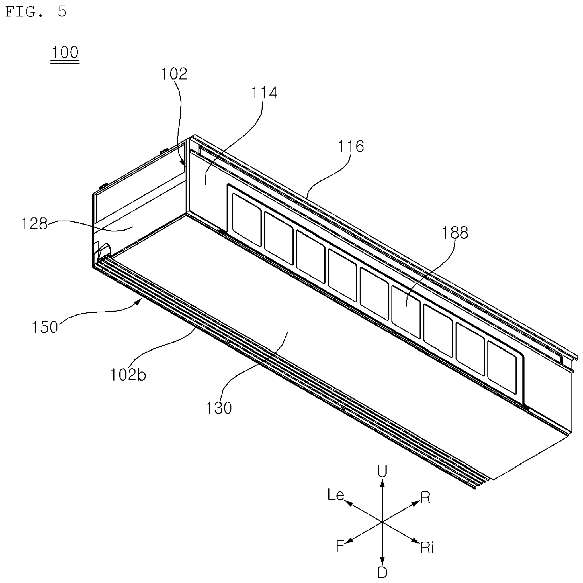

Hereinafter, a first air-processing apparatus according to an embodiment of the present disclosure will be described with reference to FIGS. 5 to 17C.

The first air-processing apparatus 100 induces air to exchange heat with a refrigerant and discharges the heat-exchanged air to the outside. The first air-processing apparatus 100 has a first inlet 102a formed in one side thereof in order to suction air thereinto and a first outlet 102b formed in another side thereof perpendicular to the first inlet 102a in order to discharge air therefrom. Referring to FIG. 5, the first inlet 102a is formed so as to be perpendicular to the surface of the floor or ceiling. The first outlet 102b is formed so as to be open downwards. The first outlet 102b is formed perpendicular to the first inlet 102a.

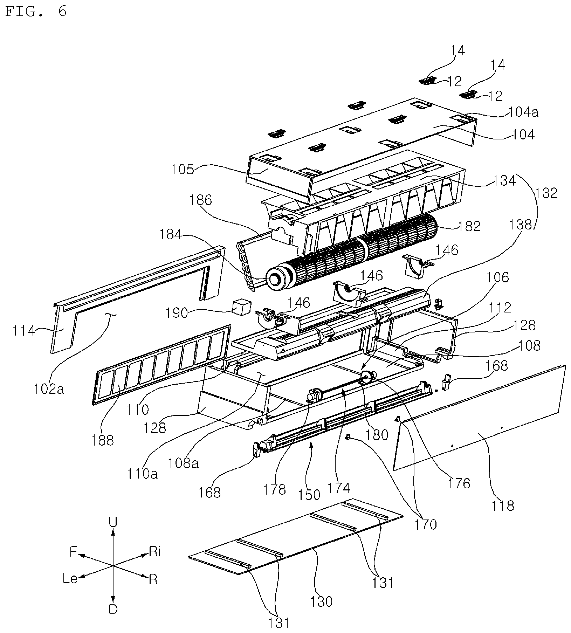

Referring to FIG. 6, the first air-processing apparatus 100 includes a first fan 182, which causes air to flow, a first fan motor 184, which rotates the first fan 182, and a heat exchanger 186, through which a refrigerant flows to exchange heat with air. The first air-processing apparatus 100 includes a first case 102, which forms the external appearance of the first air-processing apparatus 100, and a first housing 132, which is disposed inside the first case 102 and which forms a flow path through which air flows. The first air-processing apparatus 100 includes a first louver 150, which is rotatably disposed in the first case 102 in order to adjust the direction of air that is discharged from the first outlet 102b, and a first louver-driving device 174, which changes the orientation of the first louver 150.

The first air-processing apparatus 100 may include a first control box 190 for controlling the operation of the first fan motor 184 or the operation of the first louver-driving device 174.

### <First Case>

Referring to FIG. 6, the first case 102 includes a first upper cover 104, which is secured to the ceiling, a first lower cover 106, which is disposed below the first upper cover 104, a first rear cover 114, which forms therein the first inlet 102a and to which a first pre-filter 188 is mounted, a first front cover 118, which is disposed so as to be spaced forwards apart from the first rear cover 114, and two first side covers 128, which are disposed at both side ends of the first lower cover 106. Referring to FIG. 6, the first case 102 further includes a first bottom cover 130, which is disposed below the first lower cover 106.

Referring to FIG. 6, the first inlet 102a is formed in the first rear cover 114. The guide rail 10 may be mounted on the outer surface of the first rear cover 114. The first inlet 102a is formed in the lower portion of the first rear cover 114. The first pre-filter 188 is mounted in the first inlet 102a formed in the first rear cover 114. The guide rail 10 and the first support rail 116 for guiding movement of the filter cleaner 300 are mounted on the first rear cover 114.

Referring to FIG. 2, the guide rail 10 is disposed above the first inlet 102a. The first support rail 116 is disposed at the upper end of the first rear cover 114. The guide rail 10 may be provided separately from the first rear cover 114. The first support rail 116 may be formed integrally with the first rear cover 114.

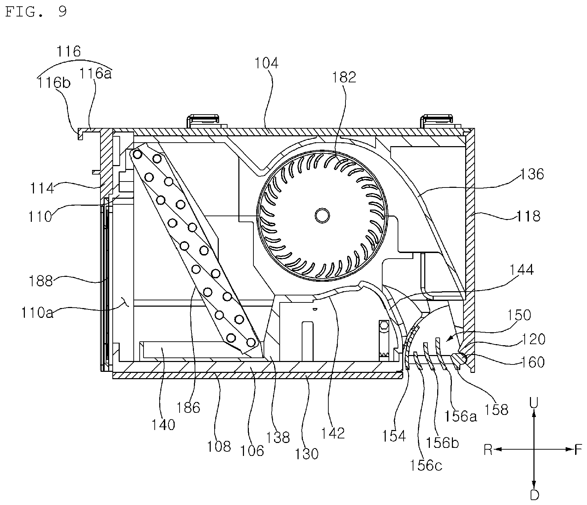

Referring to FIG. 9, the first support rail 116 includes a first top plate 116a, which protrudes rearwards from the upper end of the first rear cover 114, and a first bent portion 116b, which is bent and extends downwards from the rear end of the first top plate 116a.

A top roller 326 (refer to FIG. 2) of the filter cleaner 300 may be in contact with the first bent portion 116b.

Referring to FIG. 9, the first rear cover 114 is disposed behind a first vertical plate 110 of the first lower cover 106, which will be described later. The first rear cover 114 is fixedly disposed behind the first vertical plate 110.

Referring to FIG. 6, the first upper cover 104 has a first fixing recess 104a formed in the upper surface thereof, into which a fixing member 12 for fixing the first case 102 to the ceiling is inserted. Referring to FIG. 6, a plurality of first fixing recesses 104a is formed in the upper surface of the first upper cover 104. The fixing member 12 is inserted into and fixed to each of the plurality of first fixing recesses 104a. The fixing member 12 may have a substantial "[" shape when viewed from the side. The fixing member 12 may be connected to a mounting member 14 that is fixed to the ceiling, thereby fixing the first case 102 to the ceiling.

The first upper cover 104 may include two side plates 105, which are bent and extend downwards from both side ends thereof. Each of the two side plates 105 may be connected to a respective one of the two first side covers 128.

Referring to FIG. 6, the first lower cover 106 is disposed below the first housing 132. The first louver-driving device 174 is disposed on the first lower cover 106. The first lower cover 106 includes a first horizontal plate 108, which is disposed above the first bottom cover 130, a first vertical plate 110, which is disposed at the rear side of the first horizontal plate 108 so as to be perpendicular thereto and in which a first inner suction hole 110a is formed, and two first side walls 112, which are bent and extend upwards from both side ends of the first horizontal plate 108.

The first louver-driving device 174 is disposed on the first horizontal plate 108. The first horizontal plate 108 has a connection slit 108a formed therein to allow a vertical protrusion 131 of the first bottom cover 130 to be inserted thereinto.

Referring to FIG. 6, each of the two first side covers 128 is connected at the lower portion thereof to the first lower cover 106, and is connected at the upper portion thereof to the first upper cover 104. A first rotation support rod 168 for supporting rotation of the first louver 150 is disposed on each of the two first side covers 128. The first rotation support rod 168 is connected to each of both ends of the first louver 150, thereby supporting rotation of the first louver 150.

Referring to FIG. 9, the first front cover 118 is disposed in front of the first housing 132. Referring to FIG. 9, the lower end of the first front cover 118 is spaced a predetermined gap apart from the front end portion 106a of the first lower cover 106. The first outlet 102b is formed between the first front cover 118 and the first lower cover 106. A first louver protrusion 120, in which a first louver groove 122 for receiving a louver rotation shaft 160 is formed, is formed on the first front cover 118 in order to limit the range within which the first louver 150 can rotate.

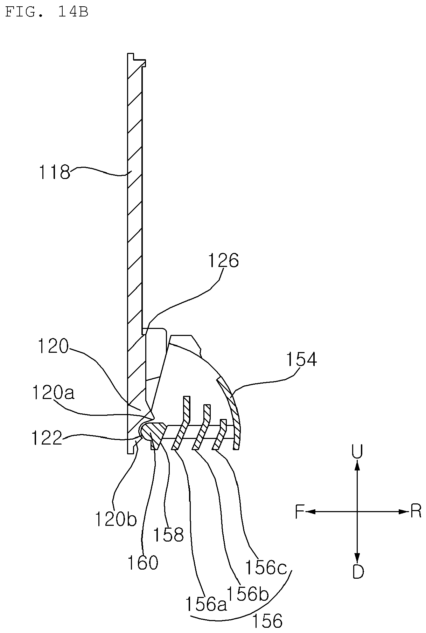

The first louver protrusion 120 is formed to be long in the leftward-rightward direction, in which the first front cover 118 is formed. Referring to FIG. 14B, the first louver protrusion 120 has the first louver groove 122 formed therein to allow the louver rotation shaft 160 of the first louver 150 to be disposed therein. The first louver groove 122 is also formed to be long in the leftward-rightward direction, in which the first louver protrusion 120 extends.

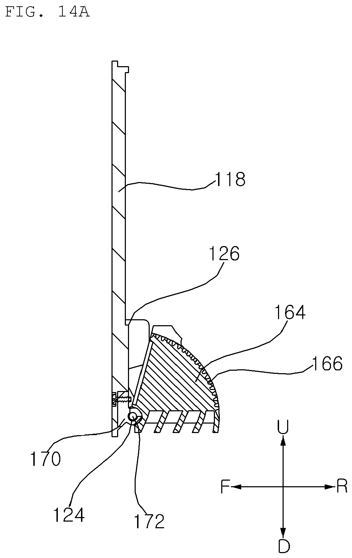

Referring to FIG. 14A, a first support-rod recess 124 in which a first auxiliary support rod 170 is disposed is formed between the left end and the right end of the first louver protrusion 120. The first auxiliary support rod 170 may be fixedly disposed on the first front cover 118, and may support rotation of the first louver 150. The first auxiliary support rod 170 is disposed between the two first rotation support rods 168, which will be described later. The first auxiliary support rod 170 may be connected to the first louver 150 via a first auxiliary rotation shaft 172.

Referring to FIG. 14B, the first louver protrusion 120 includes an upper protruding portion 120a, which forms a surface that is inclined from the upper end of the first louver groove 122 in the rearward-upward direction, and a lower protruding portion 120b, which forms a surface that is inclined from the lower end of the first louver groove 122 in the forward-downward direction.

When the upper surface of the louver rotation shaft 160 of the first louver 150, which will be described later, comes into contact with the upper protruding portion 120a, rotation of the first louver 150 in one direction is limited by the upper protruding portion 120a. When an axial vane 158 of the first louver 150, which will be described later, comes into contact with the lower protruding portion 120b, rotation of the first louver 150 in the opposite direction is limited by the lower protruding portion 120b.

Referring to FIG. 14B, a first stepped portion 126, which interferes with an end portion of a first upper housing 134 to be described later, is formed in the first front cover 118.

### <First Housing>

Referring to FIG. 9, the first housing 132 is disposed inside the first case 102, and forms therein a space through which air flows. The first fan 182 and the heat exchanger 186 are disposed inside the first housing 132. Referring to FIG. 9, the heat exchanger 186 is disposed in a region adjacent to the first inlet 102a. The heat exchanger 186 is disposed so as to be inclined toward the first fan 182 to thereby increase a heat-exchange area and minimize resistance to air flow.

The first fan motor 184 for rotating the first fan 182 is disposed inside the first housing 132. The first fan motor 184 is disposed on the rotation shaft of the first fan 182 in order to rotate the first fan 182. The first fan 182 may be implemented as a cross-flow fan, which is configured to suction air into one side thereof in the radial direction and to discharge air from another side thereof in the radial direction.

Referring to FIG. 6, a fan support bracket 146 may be disposed inside the first housing 132 in order to support rotation of the first fan 182 or to support placement of the first fan motor 184.

Referring to FIG. 6, the first housing 132 includes a first upper housing 134, which is disposed above the first fan 182, and a first lower housing 138, which is disposed below the first fan 182.

Referring to FIG. 9, the first upper housing 134 and the first lower housing 138 form discharge guides 136 and 144, along which air flows from the first fan 182 to the first outlet 102b.

The first upper housing 134 may be mounted to the first upper cover 104. The lower end of the first upper housing 134 may be disposed on the upper side of the first stepped portion 126 of the first front cover 118. Referring to FIG. 9, the first upper housing 134 includes an upper guide 136, along which air flowing out of the first fan 182 moves to the first outlet 102b. The upper guide 136 induces air flowing along the first fan 182 to move downwards. The upper guide 136 induces air flowing out of the first fan 182 to move toward the first front cover 118.

The first lower housing 138 is disposed above the first lower cover 106. Referring to FIG. 9, the first lower housing 138 includes a drain pan 140, which is disposed below the heat exchanger 186 in order to collect therein condensation dropping from the heat exchanger 186. The drain pan 140 is disposed below the heat exchanger 186 in the region in which the heat exchanger 186 is disposed.

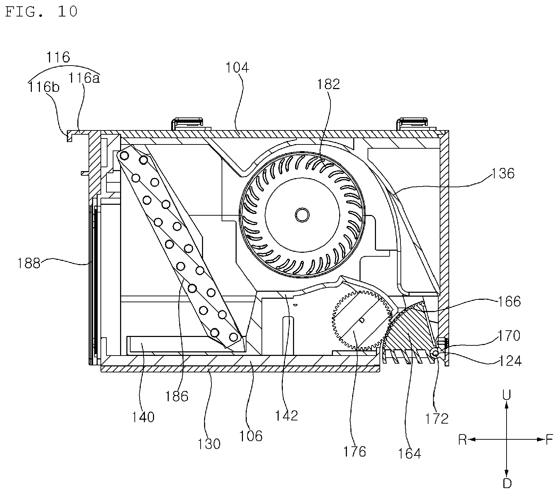

Referring to FIG. 10, the first lower housing 138 includes a driving device cover 142, which is disposed in front of the drain pan 140 and which protrudes upwards from the first lower cover 106. The driving device cover 142 forms a space thereunder in which to dispose the first louver-driving device 174. The driving device cover 142 protrudes at an incline further upwards from the region in which the drain pan 140 is disposed to the region in which the first fan 182 is disposed. The driving device cover 142 may induce air passing through the heat exchanger 186 to flow to the region in which the first fan 182 is disposed.

The driving device cover 142 includes a lower guide 144 for inducing air passing through the first fan 182 to flow to the first outlet 102b. The lower guide 144 is spaced apart from the upper guide 136 so as to form a discharge flow path 132a. The lower guide 144 has a first gear hole 142a formed in the portion thereof corresponding to the region in which the first louver gear 176 of the first louver-driving device 174 is disposed. Referring to FIG. 9, a portion of the first louver gear 176 may protrude outside the first gear hole 142a and may be in contact with the first louver 150.

### <Louver & Driving Device>

Referring to FIG. 6, the first air-processing apparatus 100 includes a first louver 150, which is rotatably disposed in the first outlet 102b in order to adjust the direction of air blown out through the first outlet 102b, and a first louver-driving device 174 for adjusting the orientation of the first louver 150.

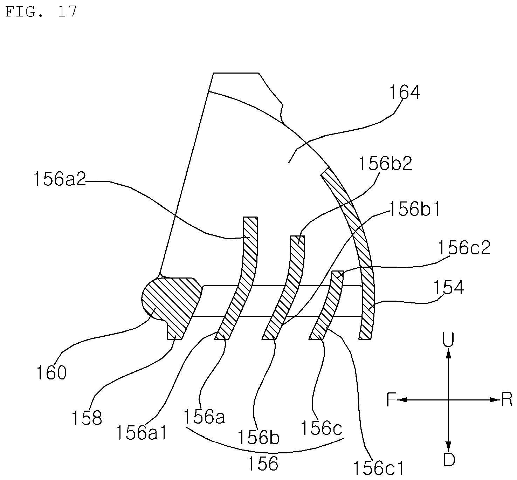

Referring to FIG. 17, the first louver 150 includes a plurality of vanes 154, 156, and 158, which are spaced apart from each other in the radial direction based on the rotation shaft.

Referring to FIG. 17, the first louver 150 includes a louver rotation shaft 160, which extends along the rotation center of the first louver 150, an outer vane 154, which is spaced outwards apart from the louver rotation shaft 160 in the radial direction, a plurality of inner vanes 156, which are spaced apart from each other in the radial direction between the louver rotation shaft 160 and the outer vane 154, and a vane gear 166, which is formed on the outer surface of the outer vane 154 in the circumferential direction.

The plurality of vanes 154, 156, and 158 may include the outer vane 154 and the plurality of inner vanes 156.

Referring to FIG. 14B, the louver rotation shaft 160 may be disposed so as to be in contact with the first front cover 118. The louver rotation shaft 160 is disposed in the first louver groove 122 in the first front cover 118. When the louver rotation shaft 160 rotates, the orientation of the plurality of vanes 154, 156, and 158, which are spaced apart from each other in the radial direction based on the louver rotation shaft 160, may be changed.

The louver rotation shaft 160 may include an axial vane 158, which extends from the louver rotation shaft 160 in a direction parallel to the inner vanes 156. The axial vane 158 extends in a direction parallel to the lower portions of the inner vanes 156.

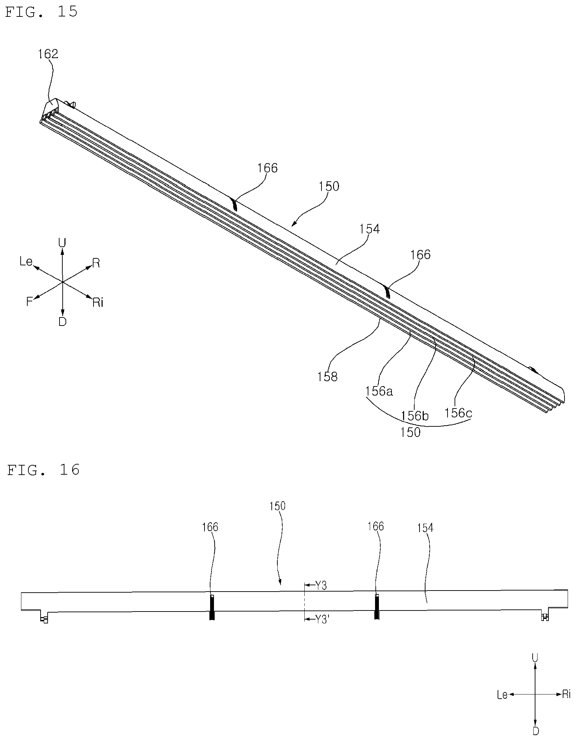

Referring to FIG. 17, the outer vane 154 is disposed farther from the louver rotation shaft 160 than the inner vanes 156. The outer vane 154 may be longer than the inner vanes 156 in the circumferential direction. Referring to FIG. 16, the outer vane 154 is formed in the circumferential direction based on the louver rotation shaft 160.

Referring to FIG. 17, the inner vanes 156 are disposed between the louver rotation shaft 160 and the outer vane 154 so as to be spaced apart from each other. The inner vanes 156 are shorter than the outer vane 154. The inner vanes 156 are longer than the axial vane 158.

Referring to FIG. 17, the inner vanes 156 have different lengths, respectively. The lengths of the inner vanes 156 gradually increase in a direction approaching the louver rotation shaft 160. The lengths of the inner vanes 156 gradually decrease in a direction approaching the outer vane 154.

Referring to FIG. 17, the inner vanes 156 include lower inner vane portions 156a1, 156b1, and 156c1, which are inclined so as to be gradually closer to the louver rotation shaft 160 in a downward direction, and upper inner vane portions 156a2, 156b2, and 156c2, which are bent and extend upwards from the upper ends of the lower inner vane portions 156a1, 156b1, and 156c1. The axial vane 158 extends in a direction parallel to the lower inner vane portions 156a1, 156b1, and 156c1.

The inner vanes 156 include a first inner vane 156a, which is disposed closest to the louver rotation shaft 160, a second inner vane 156b, which is disposed farther from the louver rotation shaft 160 than the first inner vane 156a, and a third inner vane 156c, which is disposed farther from the louver rotation shaft 160 than the second inner vane 156b.

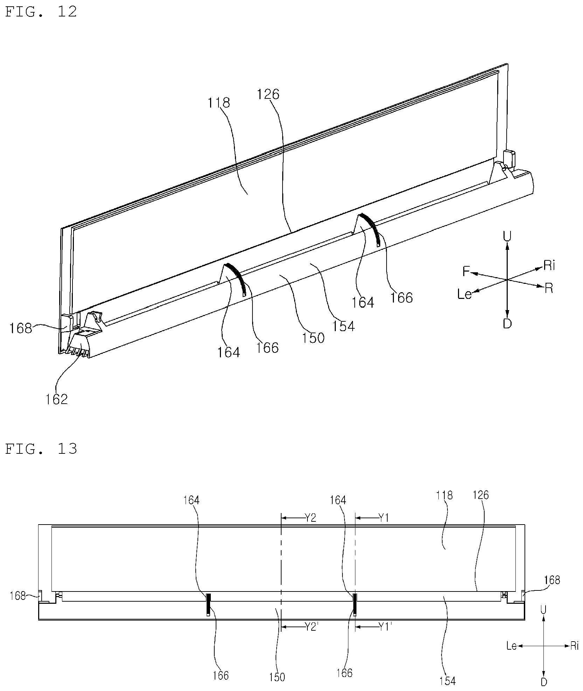

Referring to FIG. 12, the first louver 150 includes end panels 162, which are disposed at both ends of the vanes 154, 156, and 158 in a direction perpendicular to the vanes 154, 156, and 158, and a support panel 164, which is disposed between the end panels 162. The vane gear 166 is disposed on one side of the support panel 164. The end panels 162, which are disposed at both ends of the vanes 154, 156, and 158, may prevent the air flowing through the first louver 150 from being discharged in the leftward-rightward direction.

The support panel 164, which is disposed between the end panels 162, may support the vanes 154, 156, and 158. The vanes 154, 156, and 158 are formed to be long in the longitudinal direction, in which the louver rotation shaft 160 is formed. Accordingly, the support panel 164 may stably maintain the arrangement of the vanes 154, 156, and 158.

Referring to FIG. 14A, the support panel 164 may be formed in a fan shape. The vane gear 166 is disposed on the outer circumferential end of the support panel 164. The vane gear 166 may form threads on the outer circumferential end of the support panel 164 in the circumferential direction.

Referring to FIG. 14A, the support panel 164 may be connected to the first auxiliary support rod 170. The support panel 164 forms a space in which the first auxiliary support rod 170 is disposed in the portion in which the louver rotation shaft 160 is formed. The first auxiliary rotation shaft 172 is disposed inside the first auxiliary support rod 170, and the first auxiliary support rod 170 is connected to the louver rotation shaft 160 via the first auxiliary rotation shaft 172.

The vanes 154, 156, and 158 are disposed so as to protrude downwards further than the end panels 162 and the support panel 164.

The first louver 150 may include an output interface 191 for displaying the operational state of the first air-processing apparatus 100. The output interface 191 may provide visual or auditory information about the operational state of the first air-processing apparatus 100 to the user.

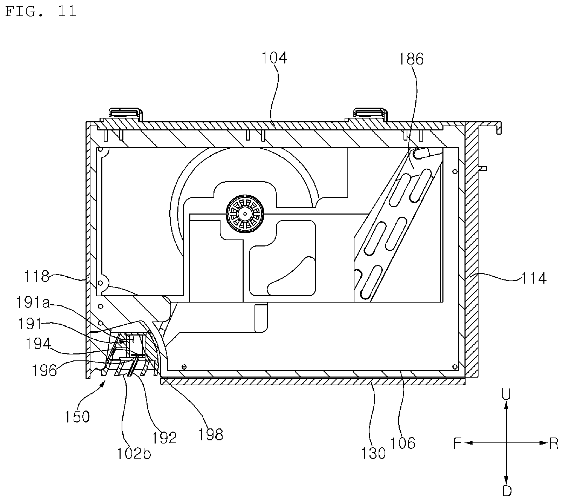

Referring to FIG. 11, the output interface 191 may visually display information about the operational state of the first air-processing apparatus 100. Also, the output interface 191 may output information about operational errors of the first air-processing apparatus 100.

The output interface 191 may include a lamp 196, a printed circuit board 194 for controlling the operation of the lamp 196, and a transparent panel 192 for transmitting the light radiated from the lamp 196 to the outside. The transparent panel 192 may be disposed on one of the vanes 154, 156, and 158. Referring to FIG. 11, the transparent panel 192 may be mounted on the inner vane 156.

The first louver 150 has formed therein a space 191a in which the lamp 196 and the printed circuit board 194 are disposed. The space 191a is disposed above the transparent panel 192. A wiring hole 198, through which a wire connected to the printed circuit board 194 passes, is formed in the upper side of the space 191a.

The first louver-driving device 174 is spaced apart from the louver rotation shaft 160 of the first louver 150 in the centrifugal direction. The first louver-driving device 174 is spaced apart from the louver rotation shaft 160, and is disposed so as to be in contact with the outer circumferential surface of the first louver 150.

Referring to FIG. 6, the first louver-driving device 174 includes a first louver gear 176, which is in contact with the first louver 150 in order to rotate the first louver 150, and a first louver motor 178 for rotating the first louver gear 176. According to the embodiment, two first louver gears 176 are provided so as to be spaced apart from each other, and the first louver-driving device 174 further includes a first gear rotation shaft 180 interconnecting the two first louver gears 176. The two first louver gears 176, which are connected to each other via the first gear rotation shaft 180, may rotate in the same direction.

### <Operation of Louver>

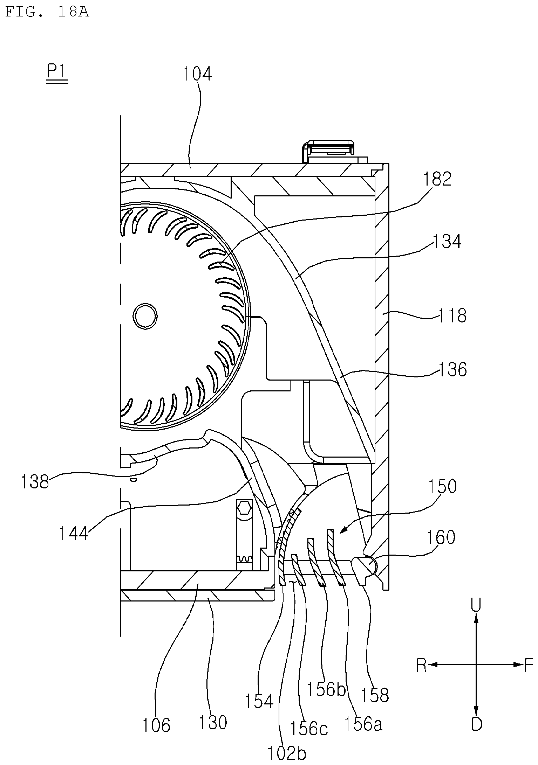

Referring to FIGS. 18A to 18C, the first louver 150 may be switched to a first mode P1 for forming an oblique air current in the forward direction, a second mode P2 for forming a horizontal air current in the forward direction, and a third mode P3 for forming a vertical air current toward the floor.

Referring to FIG. 18A, the first louver 150 is disposed above the first bottom cover 130 in the first mode P1. In the first mode P1, the lower end of each of the vanes 154, 156, and 158 of the first louver 150 may be disposed above the first bottom cover 130 in the vertical direction.

In the first mode P1, the lower end of the outer vane 154 may be oriented in a direction perpendicular to the floor. In the first mode P1, the lower end of each of the inner vanes 156a, 156b, and 156c may be inclined in the forward direction.

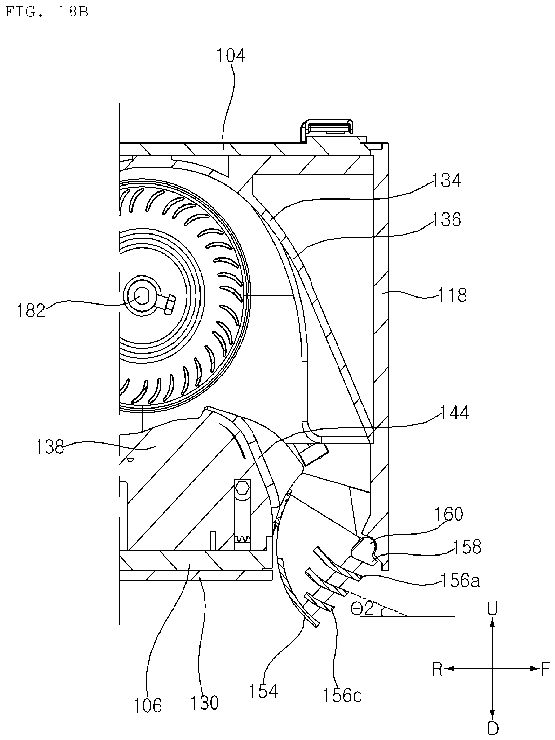

Referring to FIG. 18B, a portion of the first louver 150 is disposed below the first bottom cover 130 in the second mode P2. In the second mode P2, the lower end of the outer vane 154 and the lower end of each of the inner vanes 156a, 156b, and 156c may be disposed below the first bottom cover 130 in the vertical direction.

In the second mode P2, the inclination angle θ2 formed by the lower inner vane portion 157a of each of the inner vanes 156a, 156b, and 156c and the floor may be set to 30 degrees or less. Accordingly, in the second mode P2, the air flowing through the first louver 150 may be discharged in a direction substantially parallel to the floor.

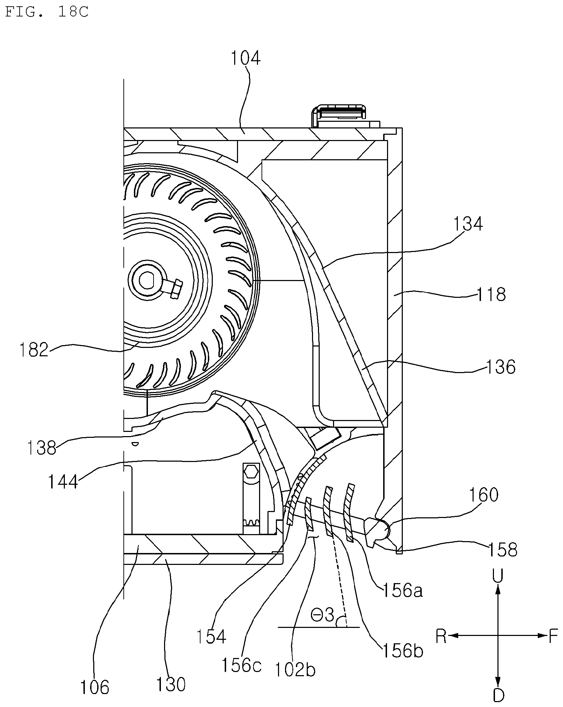

Referring to FIG. 18C, the first louver 150 is disposed above the first bottom cover 130 in the third mode P3. In the third mode P3, the lower end of the outer vane 154 and the lower end of each of the inner vanes 156a, 156b, and 156c may be disposed above the first bottom cover 130 in the vertical direction.

In the third mode P3, the inclination angle θ3 formed by the lower inner vane portion 157a of each of the inner vanes 156a, 156b, and 156c and the floor may be set to a range from 60 degrees to 90 degrees. Accordingly, in the third mode P3, the air flowing through the first louver 150 may be discharged in a direction substantially perpendicular to the floor.

### <Second Air-Processing Apparatus>

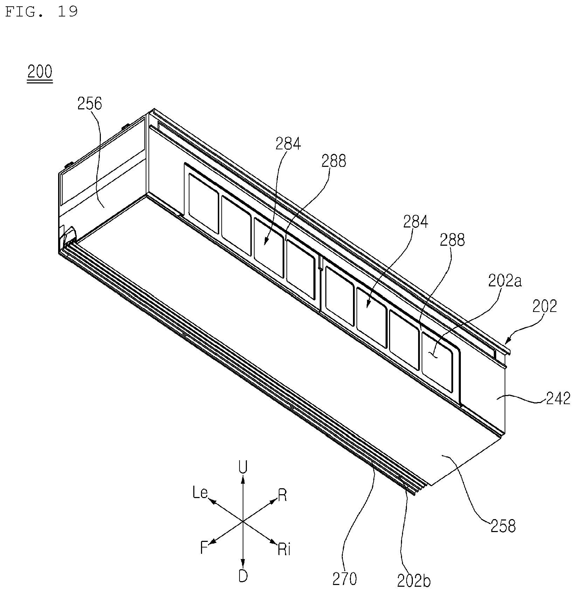

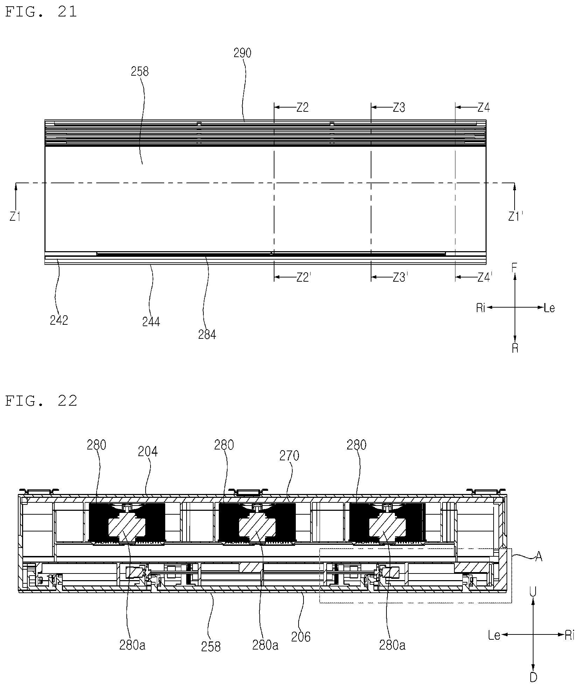

Hereinafter, a second air-processing apparatus according to an embodiment of the present disclosure will be described with reference to FIGS. 19 to 35C.

The second air-processing apparatus 200 induces air to flow through a filter device 284 and discharges the air to the outside. The second air-processing apparatus 200 has a second inlet 202a formed in one side thereof in order to suction air thereinto and a second outlet 202b formed in another side thereof perpendicular to the second inlet 202a in order to discharge air therefrom. Referring to FIG. 19, the second inlet 202a is formed so as to be perpendicular to the surface of the floor or ceiling. The second outlet 202b is formed so as to be open downwards. The second outlet 202b is formed perpendicular to the second inlet 202a.

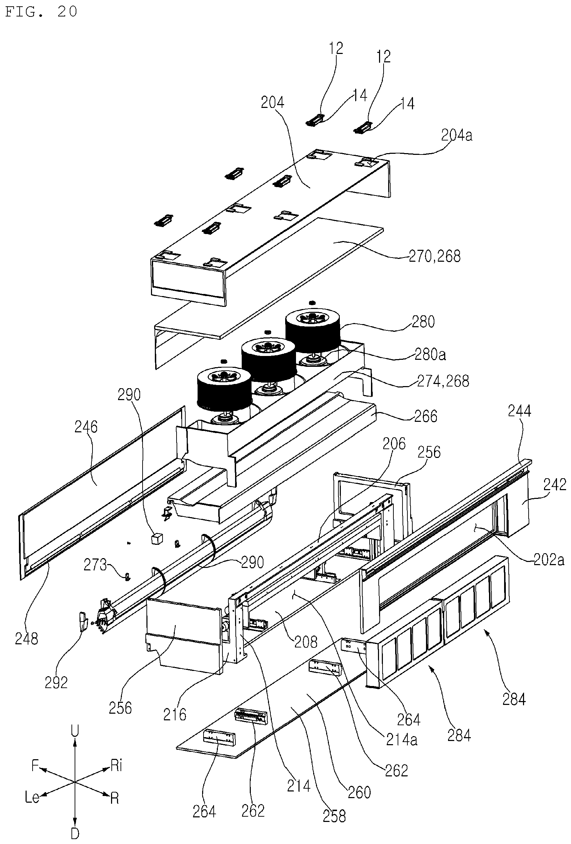

Referring to FIG. 20, the second air-processing apparatus 200 includes a second fan 280, which causes air to flow, and a second fan motor 280a, which rotates the second fan 280. According to the embodiment, a plurality of second fans 280 is provided, and a plurality of second fan motors 280a is provided such that each of the second fan motors 280a is connected to a respective one of the second fans 280.

The second air-processing apparatus 200 includes a second case 202, which forms the external appearance of the second air-processing apparatus 200, and a second housing 268, which is disposed inside the second case 202 and which forms a flow path through which air flows. The second air-processing apparatus 200 includes a second louver 290, which is rotatably disposed in the second case 202 in order to adjust the direction of air that is discharged from the second outlet 202b, and a second louver-driving device 294, which changes the orientation of the second louver 290.

The second louver 290 and the second louver-driving device 294 disposed in the second air-processing apparatus 200 may have the same structures and perform the same functions as the first louver 150 and the first louver-driving device 174 of the first air-processing apparatus 100 described above with reference to FIGS. 12 to 17. Therefore, the description of the first louver 150 and the first louver-driving device 174 of the first air-processing apparatus 100 may apply to the second louver 290 and the second louver-driving device 294 disposed in the second air-processing apparatus 200.

The second air-processing apparatus 200 may include a second control box 290 for controlling the operation of the second fan motor 280a or the operation of the second louver-driving device 294.

### <Second Case>

Referring to FIG. 20, the second case 202 includes a second upper cover 204, which is secured to the ceiling, a second lower cover 206, which is disposed below the second upper cover 204, a second rear cover 242, which forms therein the second inlet 202a and to which the filter device 284 is mounted, a second front cover 246, which is disposed so as to be spaced forwards apart from the second rear cover 242, and two second side covers 256, which are disposed at both side ends of the second lower cover 206. The second case 202 further includes a second bottom cover 258, which is disposed below the second lower cover 206 so as to be movable in the forward-rearward direction.

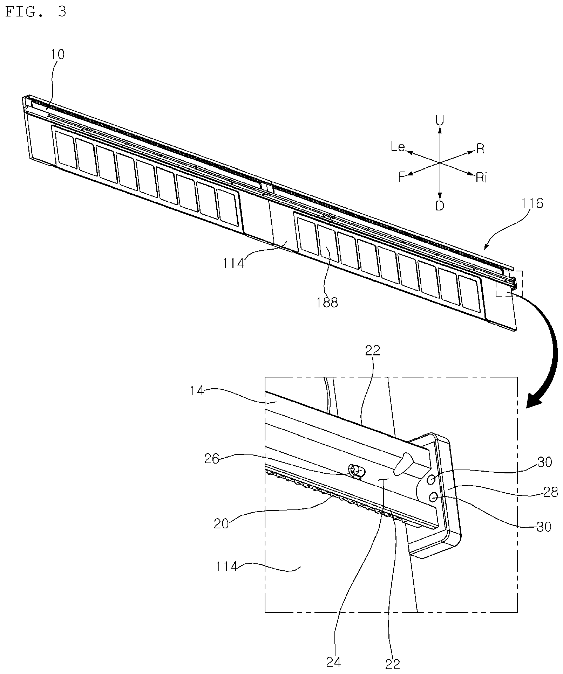

Referring to FIG. 20, the second inlet 202a is formed in the second rear cover 242. The guide rail 10 (refer to FIG. 3) may be mounted on the outer surface of the second rear cover 242. The second inlet 202a, in which the filter device 284 is mounted, is formed in the lower portion of the second rear cover 242. The guide rail 10 and the second support rail 244 for guiding movement of the filter cleaner 300 are mounted on the second rear cover 242.

The guide rail 10 is disposed above the second inlet 202a. Referring to FIG. 24, the second support rail 244 is disposed at the upper end of the second rear cover 242.

The second support rail 244 includes a second top plate 244a, which protrudes rearwards from the upper end of the second rear cover 242, and a second bent portion 244b, which is bent and extends downwards from the rear end of the second top plate 244a. The top roller 326 of the filter cleaner 300 may be in contact with the second bent portion 244b.

The second rear cover 242 is disposed behind a second vertical plate 214 of the second lower cover 206, which will be described later. The second rear cover 242 is fixedly disposed behind the second vertical plate 214.

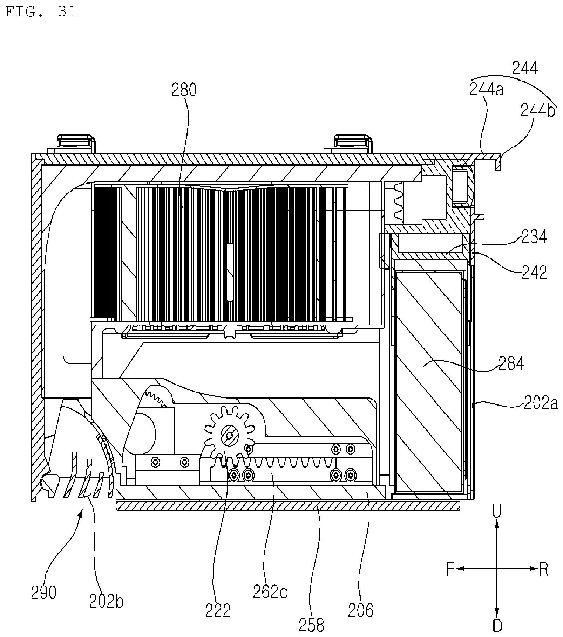

A filter-mounting part 234 (refer to FIG. 31) for moving the filter device 284 in the upward-downward direction is disposed in the second inlet 202a in the second rear cover 242. The filter-mounting part 234 may be moved in the upward-downward direction by a filter-driving device 228, which will be described later.

Referring to FIG. 20, the second upper cover 204 has a second fixing recess 204a formed in the upper surface thereof, into which a fixing member 12 for fixing the second case 202 to the ceiling is inserted. The second fixing recess 204a formed in the second upper cover 204 may have the same shape as the first fixing recess 104a formed in the first upper cover 104. Accordingly, the second upper cover 204 may be fixed to the mounting member 14 mounted to the ceiling by the fixing member 12 disposed at the upper side of the first upper cover 104.

Referring to FIG. 20, the second upper cover 204 may include two side plates 266d, which are bent and extend downwards from both side ends thereof. Each of the two side plates 266d may be connected to a respective one of the two second side covers 256.

Referring to FIG. 23, the second lower cover 206 is disposed below the second housing 268. The second louver-driving device 294 is disposed on the second lower cover 206. A cover-driving device 220 for moving the second bottom cover 258 in the forward-rearward direction is disposed on the second lower cover 206. The filter-driving device 228 for moving the filter device 284 and the filter-mounting part 234 in the upward-downward direction is disposed on the second lower cover 206.

The second lower cover 206 includes a second horizontal plate 208, which is disposed above the second bottom cover 258, a second vertical plate 214, which is disposed at the rear side of the second horizontal plate 208 so as to be perpendicular thereto and in which a second inner suction hole 214a is formed, and two second side walls 216, which are bent and extend upwards from both side ends of the second horizontal plate 208.

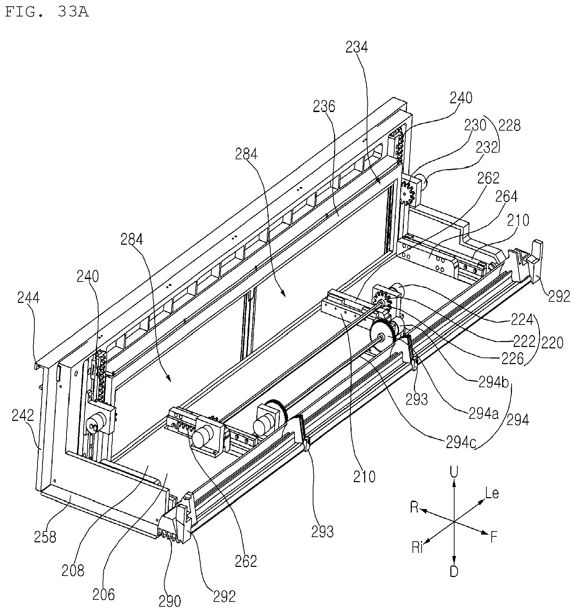

Referring to FIG. 33A, the second louver-driving device 294 is disposed on the second horizontal plate 208. The cover-driving device 220 is disposed above the second horizontal plate 208. The second horizontal plate 208 has guide grooves 208a formed therein to allow cover guides 262 and 264 of the second bottom cover 258 to be inserted thereinto.

Referring to FIGS. 31 and 33A, the cover-driving device 220 includes a cover-driving gear 222, which meshes with a guide gear 262c of the first cover guide 262, which will be described later, so as to rotate together therewith, and a cover-driving motor 224 for rotating the cover-driving gear 222.

According to the embodiment, two cover-driving gears 222 may be provided so as to be spaced apart from each other in the leftward-rightward direction. The cover-driving device 220 includes a cover-driving shaft 226 for interconnecting the two cover-driving gears 222 spaced apart from each other. Accordingly, the two cover-driving gears 222 connected to both ends of the cover-driving shaft 226 may rotate identically.

Referring to FIG. 33A, the second horizontal plate 208 is provided with fixing guides 210, which are connected to the cover guides 262 and 264 of the second bottom cover 258 in order to prevent the second bottom cover 258 from moving in the upward-downward direction. The fixing guides 210 protrude upwards from the second horizontal plate 208, and extend in the forward-rearward direction.

Referring to FIG. 33A, the fixing guides 210 may be disposed so as to be in contact with the first cover guide 262 or the second cover guide 264, which will be described later. The fixing guides 210 support the movement of the second bottom cover 258 in the forward-rearward direction. The fixing guides 210 prevent the second bottom cover 258 from moving in the upward-downward direction.

Referring to FIG. 23, the fixing guides 210 may have fixing protrusions 212, which protrude toward the cover guides 262 and 264. The fixing protrusions 212 extend in the forward-rearward direction. The fixing protrusions 212 may be disposed so as to be in contact with a first guide protrusion 262b of the first cover guide 262 or a second guide protrusion 264b of the second cover guide 264.

The fixing protrusions 212 have a structure corresponding to the first guide protrusion 262b of the first cover guide 262 or the second guide protrusion 264b of the second cover guide 264, thereby preventing the second bottom cover 258 from moving in the upward-downward direction.

Referring to FIG. 20, the second vertical plate 214 has a second inner suction hole 214a formed therein. The second inner suction hole 214a may be formed to have a size corresponding to the second inlet 202a. The filter-driving device 228 is disposed on the second vertical plate 214.

Each of the two second side covers 256 is connected at the lower portion thereof to the second lower cover 206, and is connected at the upper portion thereof to the second upper cover 204. A second rotation support rod 292 for supporting rotation of the second louver 290 is disposed on each of the two second side covers 256. The second rotation support rod 292, which is connected to each of the second side covers 256, may have the same shape as the first rotation support rod 168 connected to each of the first side covers 128.

The second front cover 246 is disposed in front of the second housing 268. The second front cover 246 may have the same shape as the first front cover 118. Also, the second front cover 246 may be disposed in the same manner as the first front cover 118. Therefore, the lower end of the second front cover 246 is spaced a predetermined gap apart from the front end portion of the second lower cover 206, thereby forming the second outlet 202b.

In addition, a second louver protrusion 248, in which a second louver groove 250 for receiving a second louver rotation shaft 270a of the second louver 290 is formed, is formed on the second front cover 246 in order to limit the range within which the second louver 290 can rotate. A second support-rod recess 252 in which a second auxiliary support rod 293 is disposed is formed between the left end and the right end of the second louver protrusion 248.

Referring to FIG. 24, a second stepped portion 254, which interferes with an end portion of a first upper housing 134 (a second upper housing 270?) to be described later, is formed in the second front cover 246.

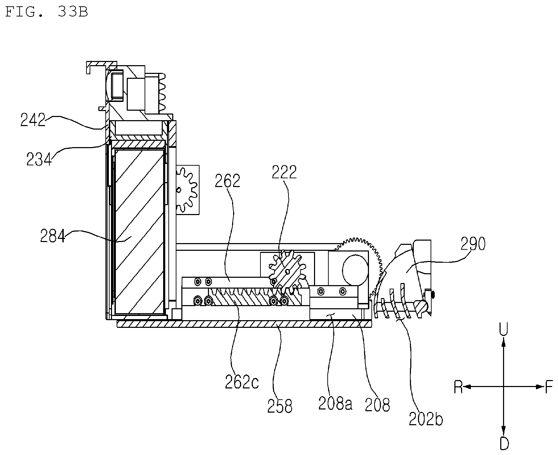

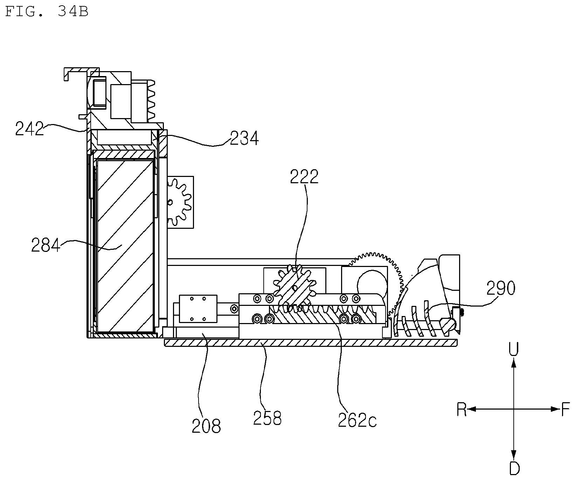

The second bottom cover 258 is disposed at the second lower cover 206 so as to be movable in the forward-rearward direction. Referring to FIG. 33B, when the second bottom cover 258 is disposed at a rear position adjacent to the second rear cover 242, the second bottom cover 258 may cover the lower side of the filter device 284. Referring to FIG. 34B, when the second bottom cover 258 is disposed at a front position adjacent to the second front cover 246, the second bottom cover 258 may block the second outlet 202b. Referring to FIG. 34B, when the second bottom cover 258 is disposed at a front position adjacent to the second front cover 246, the second bottom cover 258 may open the lower side of the filter device 284.

Referring to FIG. 20, the second bottom cover 258 includes a bottom plate 260, which is disposed below the second lower cover 206, and cover guides 262 and 264, which protrude upwards from the bottom plate 260 and which move the bottom plate 260 in the forward-rearward direction.

Referring to FIG. 23, the cover guides 262 and 264 include a first cover guide 262, which is connected to the cover-driving device 220 to move the bottom plate 260, and a second cover guide 264, which prevents the bottom plate 260 from vibrating in the upward-downward direction.

Referring to FIG. 23, the first cover guide 262 includes a first guide wall 262a, which protrudes upwards from the bottom plate 260 and extends in the forward-rearward direction, a guide gear 262c, which is disposed on one side of the first guide wall 262a and is screwed to the cover-driving device 220, and a first guide protrusion 262b, which is disposed on the opposite side of the first guide wall 262a and guides the movement of the second bottom cover 258 in the forward-rearward direction. A recess 262b1, into which the fixing protrusion 212 is inserted, is formed in the first guide protrusion 262b.

Referring to FIG. 23, the second cover guide 264 includes a second guide wall 264a, which protrudes upwards from the bottom plate 260 and extends in the forward-rearward direction, and a second guide protrusion 264b, which is disposed on one side of the second guide wall 264a and guides the movement of the second bottom cover 258 in the forward-rearward direction. A recess 264b1, into which the fixing protrusion 212 is inserted, is formed in the second guide protrusion 264b.

Referring to FIG. 20, the second air-processing apparatus 200 includes an inner cover 266, which is disposed above the second lower cover 206 and covers the upper sides of the second louver-driving device 294 and the cover-driving device 220. Referring to FIG. 24, the inner cover 266 may guide the flow of air flowing inside the second case 202, and may prevent the air from flowing to the second louver-driving device 294. The inner cover 266 is coupled to the second lower cover 206 to form a space in which the second louver-driving device 294 and the cover-driving device 220 are disposed.

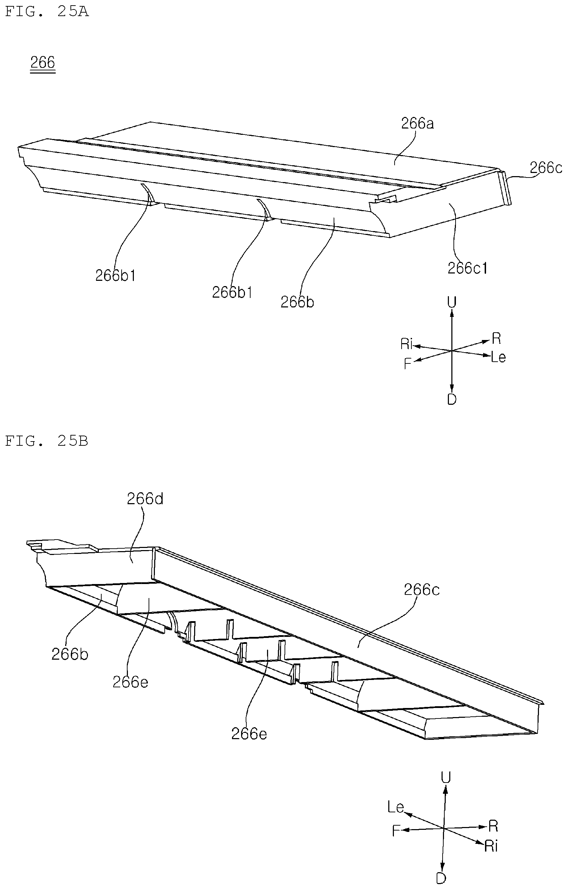

Referring to FIGS. 25A and 25B, the inner cover 266 includes an upper plate 266a, which is disposed above the second louver-driving device 294, a front plate 266b, which covers the front side of the second louver-driving device 294, a rear plate 266c, which covers the rear side of the second louver-driving device 294, and side plates 266d, which cover the lateral sides of the second louver-driving device 294.

The rear plate 266c may prevent the air flowing through the filter device 284 from flowing to the space under the inner cover 266. The upper plate 266a may guide the air flowing through the filter device 284 to the space in which the second fan 280 is disposed. The front plate 266b may guide the air flowing through the second fan 280 toward the second outlet 202b. The front plate 266b has a second gear hole 266b1 formed in the region in which a second louver gear 294a of the second louver-driving device 294 is disposed. A portion of the second louver gear 294a may protrude outside the second gear hole 266b1 (refer to FIG. 25A), and may be in contact with the second louver 290.

Referring to FIG. 25B, the inner cover 266 includes a plurality of partition walls 266e, which vertically extend downwards from the upper plate 266a. The plurality of partition walls 266e may be spaced apart from each other in the leftward-rightward direction, and may increase the rigidity of the inner cover 266.

### <Second Housing>

Referring to FIG. 24, the second housing 268 is disposed inside the second case 202 to form a space in which air flows. A second fan 280 and a second fan motor 280a for rotating the second fan 280 are disposed inside the second housing 268.

The second fan 280 may be implemented as a centrifugal fan, which suctions air in a direction parallel to the rotation axis and discharges air in the centrifugal direction. Accordingly, referring to FIG. 24, the second fan motor 280a may be disposed inside the second fan 280 to rotate the second fan 280.

The second fan motor 280a may be fixed to a second upper housing 270, which will be described later.

Referring to FIG. 24, the second housing 268 includes a second upper housing 270, which is disposed above the second fan 280, and a second lower housing 274, which is disposed below the second fan 280.

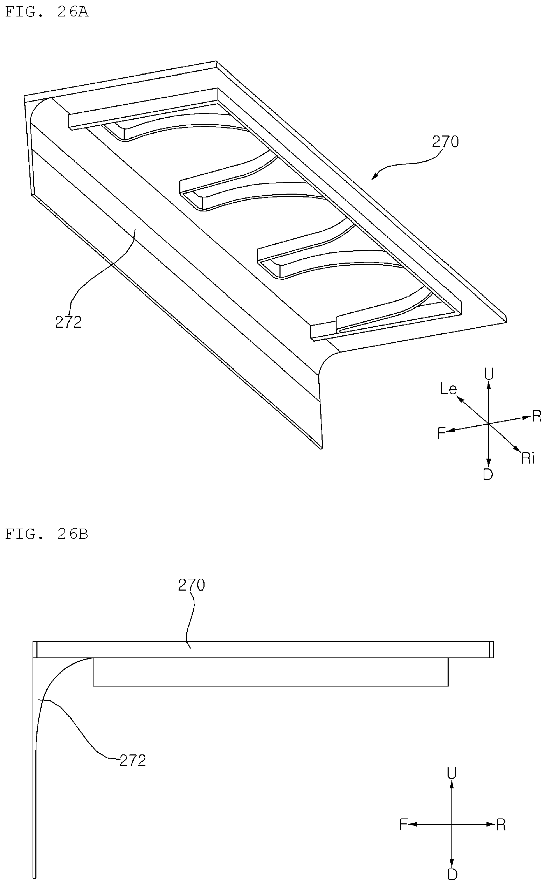

Referring to FIGS. 26A and 26B, the second upper housing 270 may be mounted to the second upper cover 204. The lower end of the second upper housing 270 may be disposed on the second stepped portion 254 of the second front cover 246. The second upper housing 270 includes a front guide 272 for guiding the air flowing through the second fan 280 to the second outlet 202b. The front guide 272 extends downwards from the front end of the second upper housing 270.

Referring to FIG. 24, the front guide 272 causes the air flowing along the second fan 280 to flow downwards. The front guide 272 guides the air flowing through the second fan 280 to the second outlet 202b.

The front guide 272 is disposed so as to be smoothly connected to the second front cover 246. Accordingly, the air flowing along the front guide 272 flows to the second outlet 202b via the second front cover 246.

Referring to FIG. 24, the second fan motor 280a is mounted in the second upper housing 270.

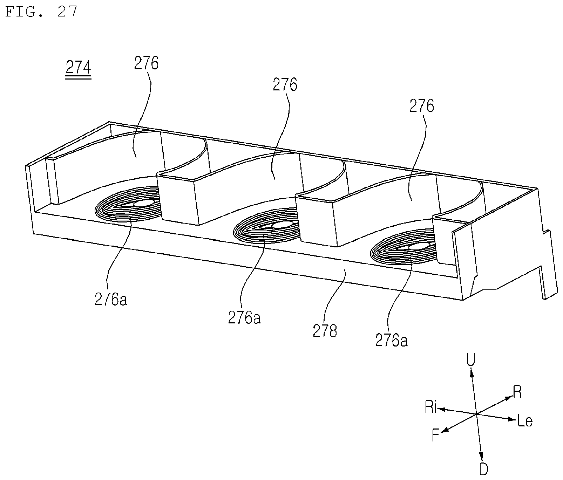

Referring to FIG. 24, the second lower housing 274 is disposed above the inner cover 266. Referring to FIG. 27, the second lower housing 274 includes a plurality of fan housings 276 forming spaces in which a plurality of second fans 280 is disposed. Each of the fan housings 276 is spaced apart from the outer circumferential surface of the second fan 280 in the radial direction. Each of the fan housings 276 has an open front portion. Accordingly, the air flowing in the radial direction of the second fan 280 may be discharged to the open front portion of each of the fan housings 276. A fan inlet 276a, through which air is introduced into the second fan 280, is formed below each of the fan housings 276.

The second lower housing 274 is spaced upwards apart from the inner cover 266. Accordingly, a suction flow path 268a, through which the air passing through the filter device 284 flows, is formed between the second lower housing 274 and the inner cover 266.

The second lower housing 274 is spaced rearwards apart from the front guide 272 of the second upper housing 270. The second lower housing 274 includes a rear guide 278, which is spaced apart from the front guide 272 and extends downwards. The second lower housing 274 is spaced upwards apart from the inner cover 266 by the rear guide 278. The rear guide 278 forms a second discharge flow path 268b in the upward-downward direction together with the front guide 272.

The front guide 272 and the rear guide 278 may guide the air flowing from the second fan 180 to the second outlet 202b.

### <Filter Device & Filter-Driving Device>

The filter device 284 is mounted to the filter-mounting part 234. The filter-mounting part 234 is movably disposed in the second case 202. The filter device 284 and the filter-mounting part 234 may be coupled to each other by means of a first magnet 287 disposed in the filter device 284 and a second magnet 238 disposed in the filter-mounting part 234. Accordingly, the position of the filter device 284 may be changed in the upward-downward direction according to movement of the filter-mounting part 234. Also, a user may easily separate the filter device 284 from the filter-mounting part 234.

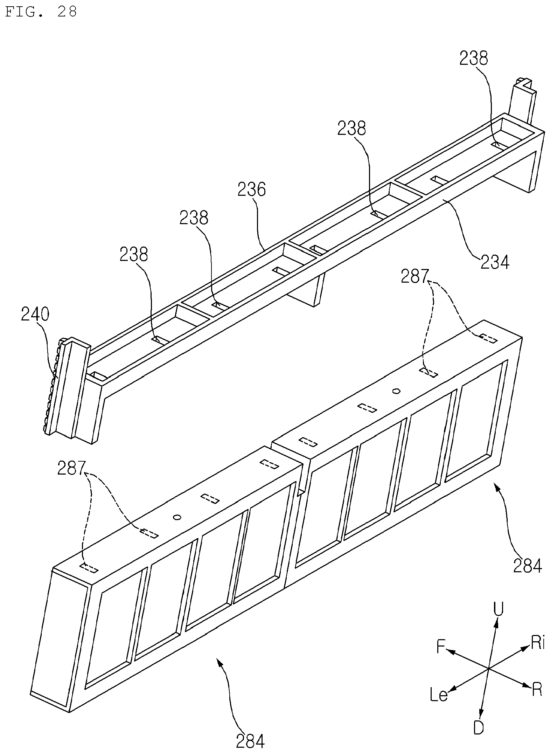

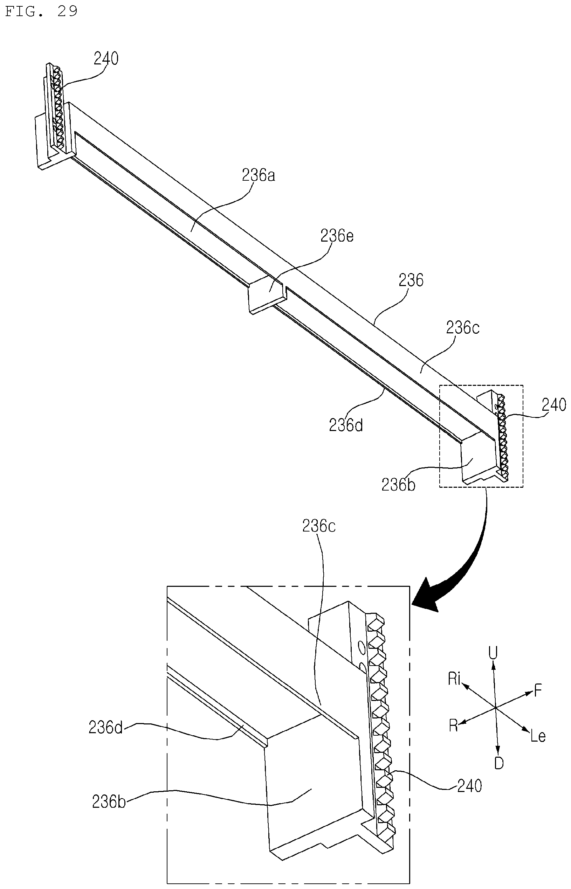

Referring to FIGS. 28 and 29, the filter-mounting part 234 includes a mounting body 236, to which the filter device 284 is mounted, and a body gear 240 for adjusting the position of the mounting body 236.

Referring to FIGS. 28 and 29, the mounting body 236 includes an upper body 236a, which is disposed above the filter device 284, side bodies 236b, which extend downwards from both ends of the upper body 236a, a front body 236c, which extends downwards from the front end of the upper body 236a, and a rear body 236d, which extends downwards from the rear end of the upper body 236a. The side bodies 236b extend downwards to be longer than the front body 236c or the rear body 236d. Two side bodies 236 may be provided at respective ends of the upper body 236a. A partition body 236e for isolating a plurality of filter devices 284 from each other may be disposed between the two side bodies 236b.

The length that the front body 236c extends downwards from the upper body 236a may be longer than the length that the rear body 236d extends downwards from the upper body 236a.

The front body 236c, the rear body 236d, and the side bodies 236b may guide mounting of the filter device 284 to the filter-mounting part 234.

A body gear 240 is disposed outside the side body 236b. The body gear 240 may be a rack gear in which threads protruding forwards extend in the upward-downward direction.

A plurality of second magnets 238 is disposed above the upper body 236a.

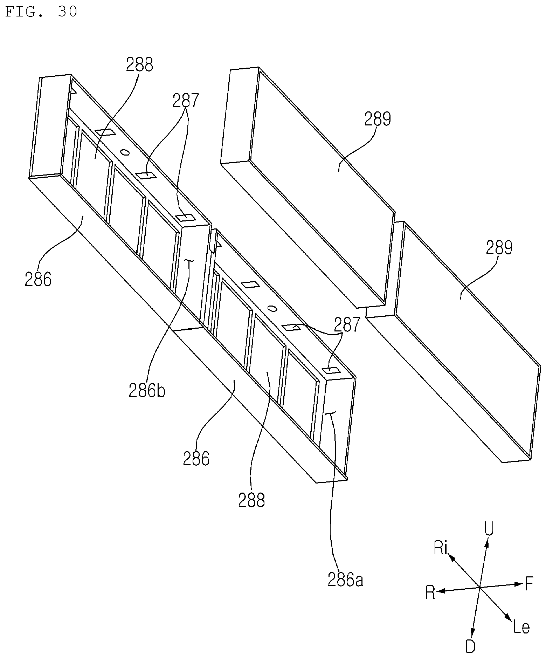

Referring to FIG. 30, the filter device 284 includes a filter case 286, which supports a second pre-filter 288 disposed in one side thereof and has an open opposite side, and a HEPA filter 289, which is disposed so as to be inserted into or withdrawn out of the filter case 286 and functions to remove fine dust.

The filter case 286 is formed to have a size capable of accommodating the HEPA filter 289. The second pre-filter 288 for primarily removing foreign substances from the air introduced into the second inlet 202a is disposed in one side of the filter case 286. The filter case 286 has an opening 286a formed in a surface thereof opposite the second pre-filter 288. The HEPA filter 289 may be inserted into or withdrawn out of the filter case 286 through the opening 286a.

The first magnet 287 is disposed on the upper wall of the filter case 286. The first magnet 287 is disposed at a position corresponding to the second magnet 238 when the filter device 284 is mounted to the filter-mounting part 234.

Referring to FIG. 33A, the filter-driving device 228 is disposed on the second lower cover 206, and moves the filter-mounting part 234 in the upward-downward direction. The filter-driving device 228 is disposed on the second vertical plate 214. The filter-driving device 228 is disposed at each of both side ends of the second vertical plate 214.

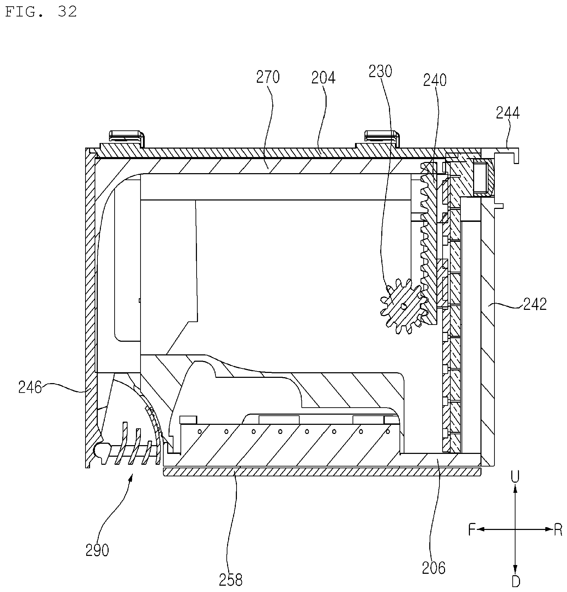

Referring to FIGS. 32 and 33A, the filter-driving device 228 includes a filter-driving gear 230, which meshes with the body gear 240 and rotates together therewith, and a filter-driving motor 232, which rotates the filter-driving gear 230. The filter-driving gear 230 may be implemented as a spur gear. The filter-driving gear 230 and the filter-driving motor 232 are fixedly disposed on the second vertical plate 214.

### <Louver & Driving Device>

The second air-processing apparatus 200 includes a second louver 290, which is rotatably disposed in the second outlet 202b in order to adjust the direction of air that is discharged from the second outlet 202b, and a second louver-driving device 294, which adjusts the orientation of the second louver 290.

The second louver 290 and the second louver-driving device 294 may have the same structures and perform the same functions as the first louver 150 and the first louver-driving device 174 of the first air-processing apparatus 100 described above. Therefore, the description of the first louver 150 and the first louver-driving device 174 of the first air-processing apparatus 100 may apply to the second louver 290 and the second louver-driving device 294.

### <Operation of Bottom Cover and Filter-Mounting Part>

Hereinafter, the movement of the second bottom cover 258, the filter-mounting part 234, and the filter device 284 will be described with reference to FIGS. 33A to 35C.

Referring to FIGS. 33A and 33B, the second bottom cover 258 is disposed below the filter device 284. Accordingly, the lower side of the second louver 270 may be opened, and thus the orientation of the second louver 270 may be changed. The filter device 284 and the filter-mounting part 234 for moving the filter device 284 are disposed above the second bottom cover 258.

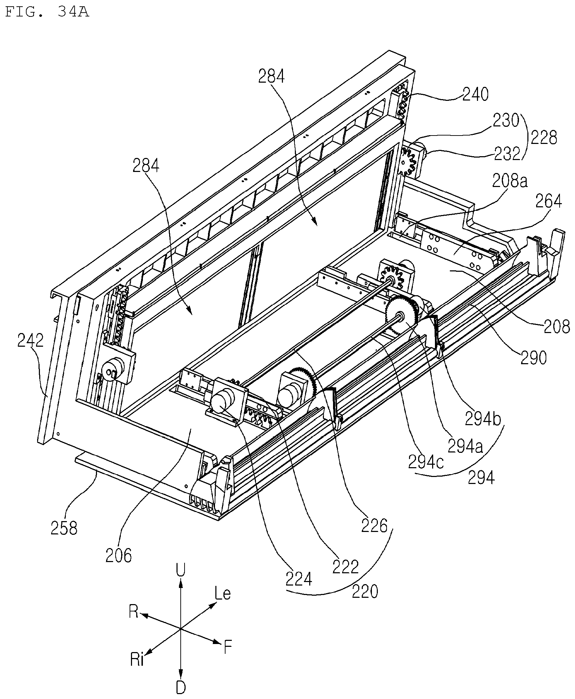

Referring to FIGS. 34A and 34B, the second bottom cover 258 may be moved forwards, and may be disposed below the second outlet 202b. The second bottom cover 258 may be moved forwards by the operation of the cover-driving device 220.

Referring to FIG. 34B, when the second bottom cover 258 is moved forwards, the region below the filter device 284 is opened. Referring to FIG. 34B, when the second bottom cover 258 is moved forwards, the lower side of the second outlet 202b is blocked. Accordingly, the rotation of the second louver 270 is restricted.

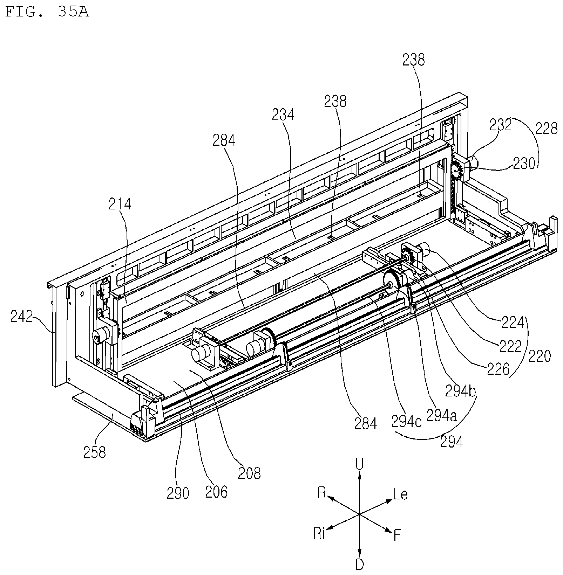

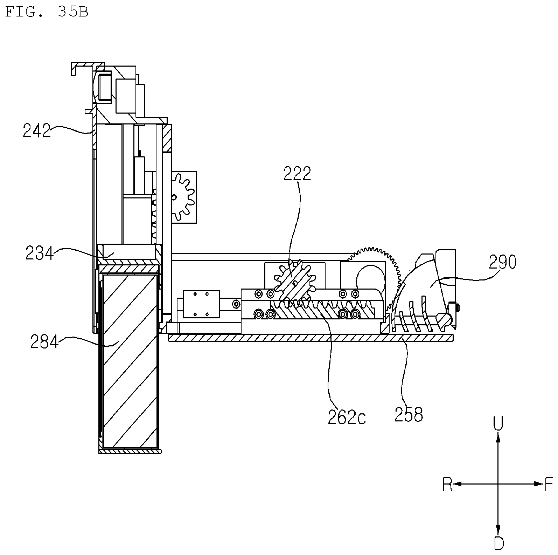

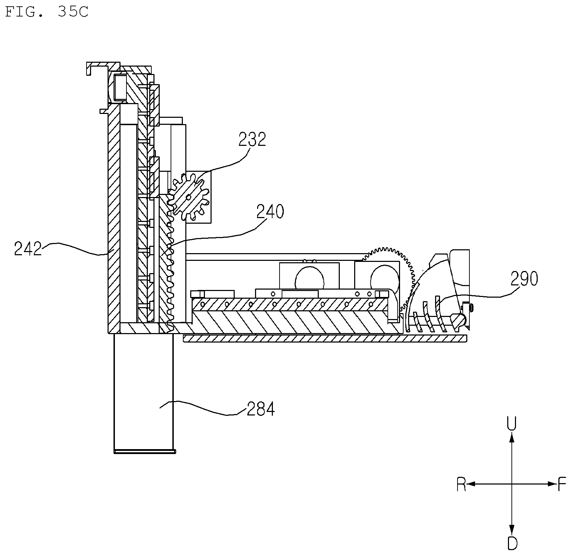

Referring to FIGS. 35A to 35C, in the state in which the second bottom cover 258 is moved forwards, the filter device 284 and the filter-mounting part 234 may be moved downwards. The filter-mounting part 234 may be moved downwards by the filter-driving device 228.

The coupled state of the filter-mounting part 234 and the filter device 284 may be maintained by the first magnet 287 and the second magnet 238. Accordingly, when the filter-mounting part 234 is moved downwards, the filter device 284 is also moved downwards.

When the filter device 284 is moved downwards by the filter-mounting part 234, a user may easily separate the filter device 284 from the filter-mounting part 234.

### <LED Optical Output Structure>

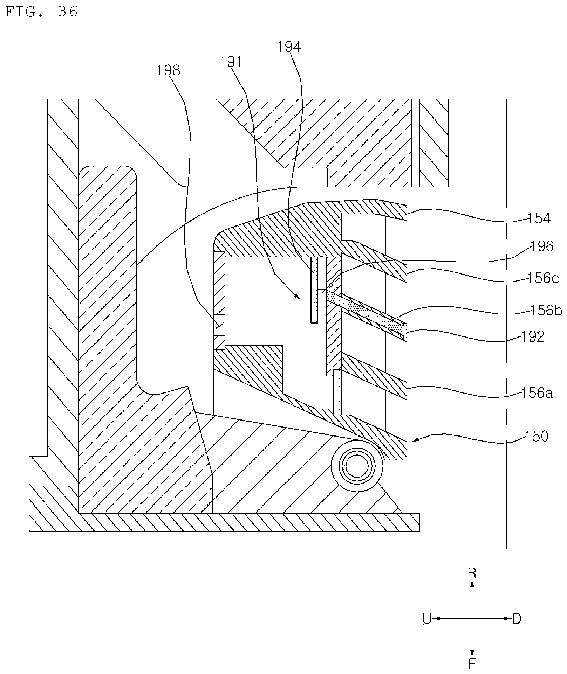

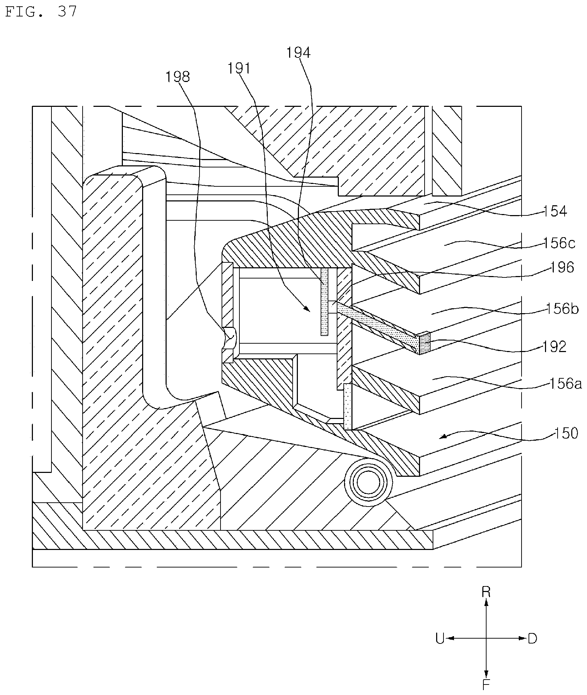

Referring to FIGS. 11 and 36 to 44, the first air-processing apparatus 100 according to an embodiment of the present disclosure includes a first case 102, in which a first outlet 102b is formed, and a first louver 150, which is rotatably disposed in the first case 102 and adjusts the direction of air that flows through the first outlet 102b.

An output device 191 for displaying the operational state of the first air-processing apparatus 100 is disposed at the first louver 150.

The output device 191 includes a lamp 196 for outputting light, a printed circuit board (PCB) 194, on which the lamp 196 is mounted, and a transparent panel 192, through which the light output from the lamp 196 passes.

The output device 191 may visually output information about the operational state or operational error of the first air-processing apparatus 100 by changing the lamp 196 between an on state and an off state or operating the lamp 196 in a flashing or constant manner. The lamp 196 may be implemented as a light-emitting diode (LED). The lamp 196 may generate one or more colors of light, and the user may check the operational state of the first air-processing apparatus 100 by visually observing the light output from the lamp 196.

The transparent panel 192 may be made of a transparent material, such as glass or plastic, which allows light to pass therethrough. The transparent panel 192 may be made of, for example, polymethylmethacrylate or polycarbonate, which is an acrylic transparent resin. The transparent panel 192 may have an optical pattern formed on the outer surface thereof in order to increase the quantity of light that is output to the front surface of the first louver 150.

The first louver 150 includes a plurality of vanes 154, 156, and 158, which are spaced apart from each other in the radial direction about the louver rotation shaft 160. The transparent panel 192 may be disposed in at least one (e.g. 156) of the plurality of vanes 154, 156, and 158.

The first louver 150 may include an outer vane 154, which is spaced apart from the louver rotation shaft 160 in the radially outward direction, and a plurality of inner vanes 156, which are disposed so as to be spaced apart from each other in the radial direction between the louver rotation shaft 160 and the outer vane 154. It is desirable for the transparent panel 192 to be mounted in one (e.g. 156) of the plurality of inner vanes 156, in which a mounting space is easily secured.

The inner vanes 156 include a first inner vane 156a, which is disposed closest to the louver rotation shaft 160, a second inner vane 156b, which is disposed farther from the louver rotation shaft 160 than the first inner vane 156a, and a third inner vane 156c, which is disposed farther from the louver rotation shaft 160 than the second inner vane 156b. It is desirable for the transparent panel 192 to be mounted in one (e.g. 156b) of the plurality of inner vanes 156a, 156b, and 156c, in which a mounting space is easily secured.

The first louver 150 may accommodate and protect the lamp 196 and the printed circuit board 194. The first louver 150 has a space 191a formed therein to accommodate the lamp 196 and the printed circuit board 194. The space 191a is located above the transparent panel 192. A cable hole 198, through which a cable connected to the printed circuit board 194 passes, is formed in the upper side of the space 191a.

A cable for supplying power and control signals may be connected to the printed circuit board 194 through the cable hole 198. In the louver structure that changes in orientation, the cable hole 198 may serve as a guide for preventing a cable for supplying power to the printed circuit board 194 from interfering with movement of the first louver 150.

The lamp 196 may be turned on or off or operated in a flashing or constant manner by the power supplied through the cable.

In general, a lamp for indicating the operational state of an air-processing apparatus is disposed on a fixed portion of a main body, which does not change in position. According to an embodiment of the present disclosure, the lamp 196 and the transparent panel 192 may be disposed in the first louver 150, thereby outputting the light emitted from the lamp 196 to the front surface of the first louver 150.

The user may recognize the operational state of the first air-processing apparatus 100 based on the color of the light emitted from the lamp 196 or the flashing state thereof.

Also, the user may intuitively recognize the orientation of the first louver 150 or the operational state of the first air-processing apparatus 100 based on the light emitted from the lamp 192. In particular, the user may easily recognize the air current direction based on the angle at which the light is output to the front surface of the first louver 150 through the transparent panel 192.

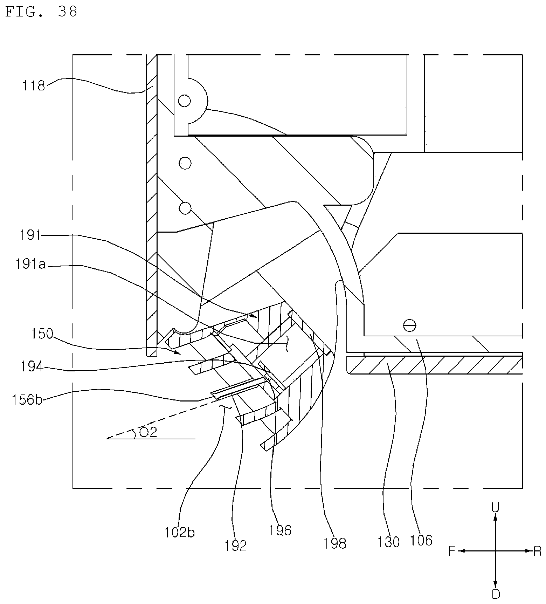

Referring to FIG. 38, a portion of the first louver 150 is disposed below the first bottom cover 130 in the second mode P2. In the second mode P2, the lower end of the outer vane 154 and the lower end of each of the inner vanes 156a, 156b, and 156c may be disposed below the first bottom cover 130 in the vertical direction.

In the second mode P2, the inclination angle θ2 formed by the lower inner vane portion 157a of each of the inner vanes 156a, 156b, and 156c and the floor may be set to 30 degrees or less. Accordingly, in the second mode P2, the air flowing through the first louver 150 may be discharged in a direction substantially parallel to the floor. In addition, the light emitted from the lamp 196 may be output in a direction substantially parallel to the floor through the transparent panel 192 disposed in the second inner vane 156b.

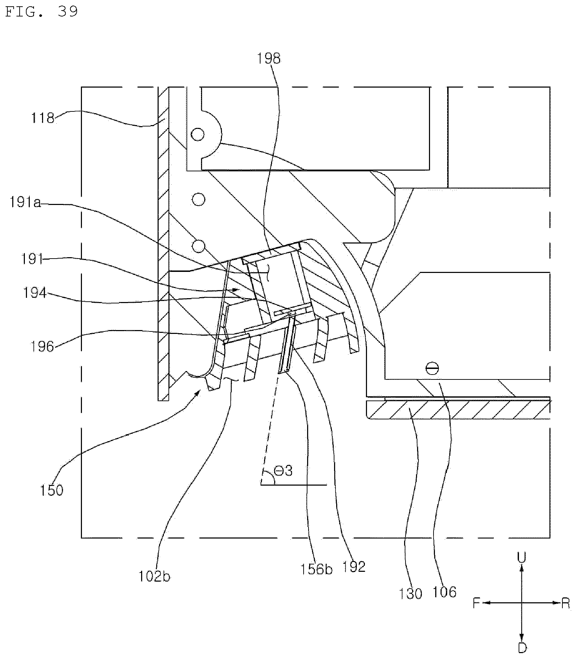

Referring to FIG. 39, the first louver 150 is disposed above the first bottom cover 130 in the third mode P3. In the third mode P3, the lower end of the outer vane 154 and the lower end of each of the inner vanes 156a, 156b, and 156c may be disposed above the first bottom cover 130 in the vertical direction.

In the third mode P3, the inclination angle θ3 formed by the lower inner vane portion 157a of each of the inner vanes 156a, 156b, and 156c and the floor may be set to a range from 60 degrees to 90 degrees. Accordingly, in the third mode P3, the air flowing through the first louver 150 may be discharged in a direction substantially perpendicular to the floor. In addition, the light emitted from the lamp 196 may be output in a direction substantially perpendicular to the floor through the transparent panel 192 disposed in the second inner vane 156b.

Further, the optical output structure provided in the first louver 150 may contribute to an aesthetically pleasing outer appearance and simple design of the first air-processing apparatus 100.

The first louver 150 may include a pair of end panels 162, which are disposed at respective ends of the vanes 154, 156, and 158 in a direction perpendicular to the vanes 154, 156, and 158, and the transparent panel 12 may be disposed so as to be spaced a predetermined distance apart from any one of the pair of end panels 162.

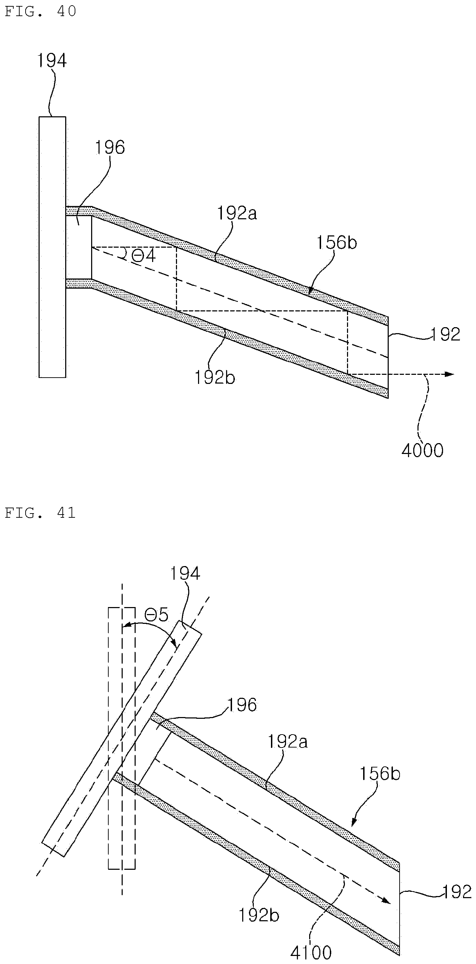

Referring to FIGS. 40 and 41, the output device 191 may further include reflectors 192a and 192b, which are disposed on the outer surface of the transparent panel 192. The reflectors 192a and 192b serve to totally reflect incident light so that the light is efficiently output to the front surface of the first louver 150. In some embodiments, optical patterns may be formed in the reflectors 192a and 192b in order to increase the quantity of light that is output to the front surface of the first louver 150.

Referring to FIG. 40, the lamp 196 emits light so that the light travels at a predetermined inclination angle θ4 relative to the center line of the second inner vane 156b. The light emitted from the lamp 196 is reflected by the reflectors 192a and 192b, and the light 4000 reflected by the reflectors 192a and 192b is output to the front surface of the first louver 150 through the transparent panel 192.

Referring to FIG. 41, the lamp 196 and the printed circuit board 194 may be disposed perpendicular to the center line of the second inner vane 156b. The lamp 196 and the printed circuit board 194 of the embodiment shown in FIG. 41 may be disposed so as to be slanted at a predetermined inclination angle θ5 relative to those of the embodiment shown in FIG. 40. Accordingly, a portion 4100 of the light emitted from the lamp 196 is output to the front surface of the first louver 150 without being reflected. Also, because the incidence angle and the reflection angle with respect to the reflectors 192a and 192b decrease, the light may pass through the transparent panel 192 with a smaller number of reflections and little optical loss.

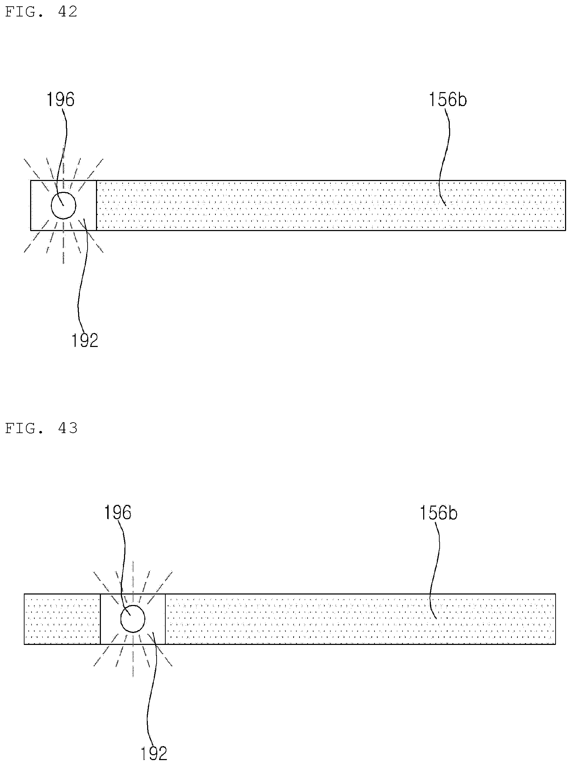

Referring to FIG. 42, the transparent panel 192 may be disposed at an end portion of the inner vane 156b. Alternatively, referring to FIG. 43, the transparent panel 192 may be disposed so as to be spaced a predetermined distance apart from an end portion of the inner vane 156b.

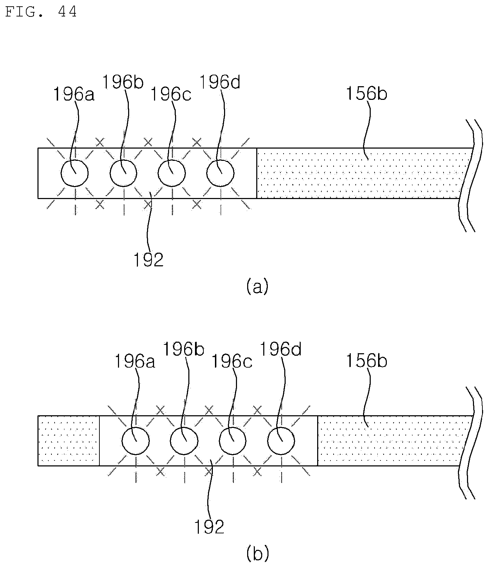

Referring to FIG. 44, the output device 191 may include a light-emitting diode (LED) array, in which multiple LEDs 196a, 196b, 196c, and 196d are arranged in a line, and the transparent panel 192 may extend in the longitudinal direction, in which the louver rotation shaft 160 is formed.

The multiple LEDs 196a, 196b, 196c, and 196d may be mounted on a single printed circuit board 194. The multiple LEDs 196a, 196b, 196c, and 196d may be disposed on the printed circuit board 194 so as to be spaced a predetermined distance apart from each other.

The second louver 290 and the second louver-driving device 294, which are disposed in the second air-processing apparatus 200, may have the same structures and functions as the first louver 150 and the first louver-driving device 174 of the first air-processing apparatus 100. Therefore, the optical output device 191 may also be applied to the second air-processing apparatus 200.

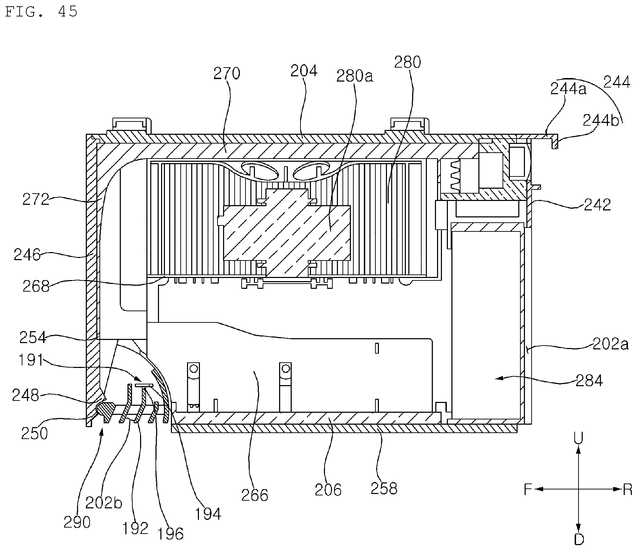

FIG. 45 is a view showing an embodiment in which the transparent panel 192, the lamp 196, and the printed circuit board 194 of the optical output device 191 are disposed in the second louver 290.

According to the embodiment of the present disclosure, the light emitted from the lamp 196 is output through the louvers 150 and 290, which change in orientation, whereby the user is capable of more easily viewing the output light.

According to the embodiment of the present disclosure, it is possible to provide more information using the lamps 196 provided in the louvers 150 and 290 for forming air currents.

As is apparent from the above description, the air-processing apparatus of the present disclosure has one or more effects as follows.

First, since light emitted from a lamp is output through a louver, which changes in orientation, a user is capable of more easily viewing the output light.

Second, it is possible to provide more information using a lamp provided in a louver for forming an air current.

Third, since a louver-driving device for driving a louver is connected to the louver at a position outside a louver rotation shaft in the radial direction, the louver is capable of expanding in the leftward-rightward direction. This can maximize the size of an outlet in the leftward-rightward direction. Accordingly, it is possible to maximize the quantity of air that is discharged from the air-processing apparatus, thereby rapidly processing the air in an indoor space.

## Claims

1. An air-processing apparatus (100) comprising:
a case (102) having an outlet (102b) formed therein;
a louver (150) rotatably disposed in the case (102) and configured to adjust a direction of air flowing through the outlet (102b); and
an output device (191) comprising a lamp (196), a printed circuit board (194) on which the lamp (196) is mounted, and a transparent panel (192) configured to allow light emitted from the lamp (196) to pass therethrough, **characterized in that**
the louver (150) comprises a plurality of vanes (154, 156, 158) spaced apart from each other in a radial direction about a louver rotation shaft (160), and
wherein the transparent panel (192) is disposed in at least one of the plurality of vanes (154, 156, 158).

2. The air-processing apparatus (100) according to claim 1, wherein the louver (150) has a cable hole (198) formed at a position above the printed circuit board (194) in order to allow a cable connected to the printed circuit board (194) to pass therethrough.

3. The air-processing apparatus (100) according to claim 1 or 2, wherein the lamp (196) and the printed circuit board (194) are accommodated in the louver (150).

4. The air-processing apparatus (100) according to any one of the preceding claims, further comprising:
a louver-driving device (174) disposed so as to be in contact with a vane (154) located at an outermost position, among the plurality of vanes (154, 156, 158), in order to change an orientation of the louver (150).

5. The air-processing apparatus (100) according to any one of the preceding claims, wherein the louver (150) comprises:
an outer vane (154) spaced apart from the louver rotation shaft (160) in a radially outward direction; and
a plurality of inner vanes (156) disposed so as to be spaced apart from each other in a radial direction between the louver rotation shaft (160) and the outer vane (154), and
wherein the transparent panel (192) is disposed in one of the plurality of inner vanes (156).

6. The air-processing apparatus (100) according to claim 5, wherein the louver (150) further comprises a vane gear (166) formed on an outer circumferential surface of the outer vane (154) in a circumferential direction, and
wherein the air-processing apparatus (100) further comprises a louver-driving device (174) engaged with the vane gear (166) to rotate the louver (150).

7. The air-processing apparatus (100) according to claim 5 or 6, wherein the outer vane (154) is formed in a shape of an arc extending in a circumferential direction based on the louver rotation shaft (160).

8. The air-processing apparatus (100) according to any one of claims 5 to 7, wherein the plurality of inner vanes (156) is formed to be shorter than the outer vane (154).

9. The air-processing apparatus (100) according to any one of claims 5 to 8, wherein lengths of the plurality of inner vanes (156) are different from each other.

10. The air-processing apparatus (100) according to any one of claims 5 to 9, wherein lengths of the plurality of inner vanes (156) gradually increase in a direction approaching the louver rotation shaft (160).

11. The air-processing apparatus (100) according to any one of claims 5 to 10, wherein a spacing distance between the outer vane (154) and each of the plurality of inner vanes (156) gradually increases towards the louver rotation shaft (160).

12. The air-processing apparatus (100) according to any one of claims 5 to 11, wherein each of the plurality of inner vanes (156) comprises:
a lower inner vane portion (156a1, 156b1, 156c1) formed to be inclined with reference to a vertical plane so as to be gradually closer to the louver rotation shaft (160) in a direction towards the outlet (102b); and
an upper inner vane portion (156a2, 156b2, 156c2) bent and extending upwards from an upper end of the lower inner vane portion (156a1, 156b1, 156c1).

13. The air-processing apparatus (100) according to any one of claims 5 to 12, wherein the louver (150) further comprises an axial vane (158) extending from the louver rotation shaft (160) in a direction parallel to the lower inner vane portion (156a1, 156b1, 156c1).

14. The air-processing apparatus (100) according to any one of the preceding claims, wherein the output device (191) further comprises a reflector (192a, 192b) disposed on an outer surface of the transparent panel (192).

15. The air-processing apparatus (100) according to any one of the preceding claims, wherein the lamp (196) is a light-emitting diode, LED,
wherein the output device (191) comprises a light-emitting diode, LED, array including a plurality of light-emitting diodes disposed in a line, and
wherein the transparent panel (192) extends in a longitudinal direction in which the louver rotation shaft (160) is formed.

## Patentansprüche

1. Luftverarbeitungsvorrichtung (100), die aufweist:
ein Gehäuse (102) mit einem darin ausgebildeten Auslass (102b);
ein Lüftungsgitter (150), das drehbar im Gehäuse (102) angeordnet und konfiguriert ist,
eine Richtung der durch den Auslass (102b) strömenden Luft einzustellen; und
eine Ausgabevorrichtung (191), die eine Leuchte (196), eine Leiterplatte (194), auf der die Leuchte (196) angebracht ist, und eine transparente Platte (192) aufweist, die konfiguriert ist, von der Leuchte (196) emittiertes Licht durchzulassen, **dadurch gekennzeichnet, dass**
das Lüftungsgitter (150) mehrere Flügel (154, 156, 158) aufweist, die in einer radialen Richtung um eine Lüftungsgitter-Drehwelle (160) voneinander beabstandet sind, und
wobei die transparente Platte (192) in mindestens einem der mehreren Flügel (154, 156, 158) angeordnet ist.

2. Luftverarbeitungsvorrichtung (100) nach Anspruch 1, wobei das Lüftungsgitter (150) ein Kabelloch (198) aufweist, das an einer Position oberhalb der Leiterplatte (194) ausgebildet ist, um den Durchgang eines mit der Leiterplatte (194) verbundenen Kabels zu ermöglichen.

3. Luftverarbeitungsvorrichtung (100) nach Anspruch 1 oder 2, wobei die Leuchte (196) und die Leiterplatte (194) im Lüftungsgitter (150) untergebracht sind.

4. Luftverarbeitungsvorrichtung (100) nach einem der vorhergehenden Ansprüche, die ferner aufweist:
eine Lüftungsgitter-Antriebsvorrichtung (174), die so angeordnet ist, dass sie in Kontakt mit einem Flügel (154) steht, der sich an einer äußersten Position unter den mehreren Flügeln (154, 156, 158) befindet, um eine Ausrichtung des Lüftungsgitters (150) zu ändern.

5. Luftverarbeitungsvorrichtung (100) nach einem der vorhergehenden Ansprüche, wobei das Lüftungsgitter (150) aufweist:
einen äußeren Flügel (154), der von der Lüftungsgitter-Drehwelle (160) in radialer Richtung nach außen beabstandet ist; und
mehrere innere Flügel (156), die so angeordnet sind, dass sie in einer radialen Richtung zwischen der Lüftungsgitter-Drehwelle (160) und dem äußeren Flügel (154) voneinander beabstandet sind, und
wobei die transparente Platte (192) in einem der mehreren inneren Flügel (156) angeordnet ist.

6. Luftverarbeitungsvorrichtung (100) nach Anspruch 5, wobei das Lüftungsgitter (150) ferner ein Flügelzahnrad (166) aufweist, das an einer Außenumfangsfläche des äußeren Flügels (154) in einer Umfangsrichtung ausgebildet ist, und
wobei die Luftverarbeitungsvorrichtung (100) ferner eine Lüftungsgitter-Antriebsvorrichtung (174) aufweist, die mit dem Flügelzahnrad (166) in Eingriff steht, um das Lüftungsgitter (150) zu drehen.

7. Luftverarbeitungsvorrichtung (100) nach Anspruch 5 oder 6, wobei der äußere Flügel (154) in Form eines Bogens ausgebildet ist, der sich in Bezug auf die Lüftungsgitter-Drehwelle (160) in einer Umfangsrichtung erstreckt.

8. Luftverarbeitungsvorrichtung (100) nach einem der Ansprüche 5 bis 7, wobei die mehreren inneren Flügel (156) kürzer als der äußere Flügel (154) ausgebildet sind.

9. Luftverarbeitungsvorrichtung (100) nach einem der Ansprüche 5 bis 8, wobei sich die Längen der mehreren inneren Flügel (156) voneinander unterscheiden.

10. Luftverarbeitungsvorrichtung (100) nach einem der Ansprüche 5 bis 9, wobei die Längen der mehreren inneren Flügel (156) in einer Richtung zur Lüftungsgitter-Drehwelle (160) allmählich zunehmen.

11. Luftverarbeitungsvorrichtung (100) nach einem der Ansprüche 5 bis 10, wobei ein Abstand zwischen dem äußeren Flügel (154) und jedem der mehreren inneren Flügel (156) in einer Richtung zur Lüftungsgitter-Drehwelle (160) allmählich zunimmt.

12. Luftverarbeitungsvorrichtung (100) nach einem der Ansprüche 5 bis 11, wobei jeder der mehreren inneren Flügel (156) aufweist:
einen unteren inneren Flügelabschnitt (156a1, 156b1, 156c1), der so ausgebildet ist, dass er in Bezug auf eine vertikale Ebene geneigt ist, so dass er sich in einer Richtung zum Auslass (102b) hin allmählich der Lüftungsgitter-Drehwelle (160) nähert; und
einen oberen inneren Flügelabschnitt (156a2, 156b2, 156c2), der gebogen ist und sich von einem oberen Ende des unteren inneren Flügelabschnitts (156a1, 156b1, 156c1) nach oben erstreckt.

13. Luftverarbeitungsvorrichtung (100) nach einem der Ansprüche 5 bis 12, wobei das Lüftungsgitter (150) ferner einen axialen Flügel (158) aufweist, der sich von der Lüftungsgitter-Drehwelle (160) in einer Richtung parallel zum unteren inneren Flügelabschnitt (156a1, 156b1, 156c1) erstreckt.

14. Luftverarbeitungsvorrichtung (100) nach einem der vorhergehenden Ansprüche, wobei die Ausgabevorrichtung (191) ferner einen Reflektor (192a, 192b) aufweist, der auf einer Außenfläche der transparenten Platte (192) angeordnet ist.

15. Luftverarbeitungsvorrichtung (100) nach einem der vorangehenden Ansprüche, wobei die Leuchte (196) eine Leuchtdiode, LED, ist,
wobei die Ausgabevorrichtung (191) eine Leuchtdioden, LED, Anordnung aufweist, die mehrere Leuchtdioden enthält, die in einer Linie angeordnet sind, und
wobei sich die transparente Platte (192) in einer Längsrichtung erstreckt, in der die Lüftungsgitter-Drehwelle (160) ausgebildet ist.

## Revendications

1. Appareil de traitement d'air (100), comprenant :
un boîtier (102) dans lequel est formé une sortie (102b) ;
une persienne (150) disposée de manière pivotante dans le boîtier (102) et prévue pour régler la direction de l'air s'écoulant par la sortie (102b) ; et
un dispositif d'émission (191) comprenant une lampe (196), une carte de circuit imprimé (194) sur laquelle la lampe (196) est montée, et un panneau transparent (192) prévu pour laisser passer la lumière émise par la lampe (196), **caractérisé en ce que**
la persienne (150) comprend une pluralité de lamelles (154, 156, 158) espacées les unes des autres dans une direction radiale autour d'un arbre de pivotement de persienne (160), et
**en ce que** le panneau transparent (192) est disposé dans au moins une lamelle de la pluralité de lamelles (154, 156, 158).

2. Appareil de traitement d'air (100) selon la revendication 1, où la persienne (150) comporte un trou passe-câble (198) formé à un emplacement au-dessus de la carte de circuit imprimé (194) pour permettre le passage d'un câble connecté à la carte de circuit imprimé (194).

3. Appareil de traitement d'air (100) selon la revendication 1 ou la revendication 2, où la lampe (196) et le circuit imprimé (194) sont logés dans la persienne (150).

4. Appareil de traitement d'air (100) selon l'une des revendications précédentes, comprenant en outre :
un dispositif d'entraînement de persienne (174) disposé de manière à être en contact avec une lamelle (154) disposée le plus vers l'extérieur parmi la pluralité de lamelles (154, 156, 158), afin de modifier l'orientation de la persienne (150).

5. Appareil de traitement d'air (100) selon l'une des revendications précédentes, où la persienne (150) comprend :
une lamelle extérieure (154) espacée de l'arbre de pivotement de persienne (160) dans une direction radiale vers l'extérieur ; et
une pluralité de lamelles intérieures (156) disposées de manière à être espacées les unes des autres dans une direction radiale entre l'arbre de pivotement de persienne (160) et la lamelle extérieure (154), et
où le panneau transparent (192) est disposé dans une lamelle de la pluralité de lamelles intérieures (156).

6. Appareil de traitement d'air (100) selon la revendication 5, où la persienne (150) comprend en outre un engrenage de lamelle (166) formée sur une surface circonférentielle extérieure de la lamelle extérieure (154) dans la direction circonférentielle, et
où l'appareil de traitement d'air (100) comprend en outre un dispositif d'entraînement de persienne (174) engagé avec l'engrenage de lamelle (166) pour faire pivoter la persienne (150).

7. Appareil de traitement d'air (100) selon la revendication 5 ou la revendication 6, où la lamelle extérieure (154) est en forme d'arc s'étendant dans la direction circonférentielle par rapport à l'arbre de pivotement de persienne (160).

8. Appareil de traitement d'air (100) selon l'une des revendications 5 à 7, où la pluralité de lamelles intérieures (156) sont formées de manière à être plus courtes que la lamelle extérieure (154).

9. Appareil de traitement d'air (100) selon l'une des revendications 5 à 8, où les longueurs de la pluralité de lamelles intérieures (156) diffèrent les unes des autres.

10. Appareil de traitement d'air (100) selon l'une des revendications 5 à 9, où les longueurs de la pluralité de lamelles intérieures (156) augmentent progressivement en se rapprochant de l'arbre de pivotement de persienne (160).

11. Appareil de traitement d'air (100) selon l'une des revendications 5 à 10, où un d'espacement entre la lamelle extérieure (154) et chaque lamelle de la pluralité de lamelles intérieures (156) augmente progressivement dans la direction de l'arbre de pivotement de persienne (160).

12. Appareil de traitement d'air (100) selon l'une des revendications 5 à 11, où chaque lamelle de la pluralité de lamelles intérieures (156) comprend :
une partie inférieure de lamelle intérieure (156a1, 156b1, 156c1) formée en inclinaison par rapport à un plan vertical de manière à se rapprocher progressivement de l'arbre de pivotement de persienne (160) dans la direction de la sortie (102b) ; et
une partie supérieure de lamelle intérieure (156a2, 156b2, 156c2) coudée et s'étendant vers le haut depuis une extrémité supérieure de la partie inférieure de lamelle intérieure (156a1, 156b1, 156c1).

13. Appareil de traitement d'air (100) selon l'une des revendications 5 à 12, où la lamelle (150) comprend en outre une lamelle axiale (158) s'étendant depuis l'arbre de pivotement de persienne (160) dans une direction parallèle à la partie inférieure de lamelle intérieure (156a1, 156b1, 156c1).

14. Appareil de traitement d'air (100) selon l'une des revendications précédentes, où le dispositif d'émission (191) comprend en outre un réflecteur (192a, 192b) disposé sur une surface extérieure du panneau transparent (192).

15. Appareil de traitement d'air (100) selon l'une des revendications précédentes, où la lampe (196) est une diode électroluminescente, DEL,
où le dispositif d'émission (191) comprend un réseau de diodes électroluminescentes, DEL, présentant une pluralité de diodes électroluminescentes disposées en ligne, et
où le panneau transparent (192) s'étend dans une direction longitudinale dans laquelle l'arbre de pivotement de persienne (160) est formé.
